(19) **Europäisches Patentamt / European Patent Office / Office européen des brevets**

(11) **EP 4 473 636 B1**

(12) **FASCICULE DE BREVET EUROPEEN**

(45) Date de publication et mention de la délivrance du brevet:
**29.07.2026 Bulletin 2026/31**

(21) Numéro de dépôt: **23706404.3**

(22) Date de dépôt: **25.01.2023**

(51) Classification Internationale des Brevets (IPC):
**H02J 7/00** *(2026.01)*

(52) Classification Coopérative des Brevets (CPC):
**H02J 7/875; H02J 7/927**

(86) Numéro de dépôt international:
**PCT/FR2023/050100**

(87) Numéro de publication internationale:
**WO 2023/148442 (10.08.2023 Gazette 2023/32)**

(54) **SYSTÈME DE RÉGÉNÉRATION COMPRENANT PLUSIEURS LIGNES DE RÉGÉNÉRATION POUR LA RÉGÉNÉRATION EN SIMULTANÉ DE PLUSIEURS JEUX DE BATTERIES CONNECTÉS**

REGENERATIONSSYSTEM MIT MEHREREN REGENERATIONSLEITUNGEN ZUR GLEICHZEITIGEN REGENERATION MEHRERER VERBUNDENER BATTERIESÄTZE

REGENERATION SYSTEM COMPRISING MULTIPLE REGENERATION LINES FOR SIMULTANEOUSLY REGENERATING MULTIPLE CONNECTED SETS OF BATTERIES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **03.02.2022 FR 2200953**

(43) Date de publication de la demande:
**11.12.2024 Bulletin 2024/50**

(73) Titulaire: **Be Energy**
**84000 Avignon (FR)**

(72) Inventeur: **COSTE, Bertrand**
**30400 Villeneuve les Avignon (FR)**

(74) Mandataire: **Germain Maureau**
**12, rue Boileau**
**69006 Lyon (FR)**

(56) Documents cités:
**FR-A1- 2 955 000     US-B1- 6 856 118**

## Description

### [Domaine technique]

L'invention se rapporte à un système de régénération pour plusieurs types de batteries d'accumulateurs.

L'invention trouve une application favorite, et non limitative, dans la régénération de tous types de batteries au plomb et de batteries Nickel-Cadmium, par exemple les batteries de démarrage, à décharge lente (dites batteries de « traction »), ou bien encore stationnaires.

### [Etat de la technique]

De manière connue, les batteries d'accumulateurs sont des systèmes consistant en un ensemble d'accumulateurs électriques qui sont reliés entre eux, et qui permettent, selon des réactions électrochimiques réversibles, de convertir et stocker l'énergie électrique sous forme chimique lors d'une phase dite de charge, et de la restituer sous forme de courant continu lors d'une phase dite de décharge. Une pluralité de types et de technologies de batteries sont disponibles dans l'existant. Les batteries au plomb et les batteries Nickel-Cadmium (ou Ni-Cd) sont utilisées dans de nombreux domaines (Automobile, Ferroviaire, Industriel, etc.), dans les réseaux et installations nécessitant l'accès immédiat à une énergie électrique en cas de coupure d'électricité comme les télécoms et les hôpitaux; ou bien encore sont au cœur de systèmes de production électrique en sites isolés non raccordés au réseau électrique (comme les installations solaires ou les sites d'éoliennes) en assurant le stockage et la redistribution de l'électricité jour et nuit.

Au cours de leur cycle de vie, les batteries sont amenées à effectuer à plusieurs reprises des charges et des décharges.

Plus précisément, les batteries (ou plus précisément les accumulateurs les constituant) comprennent deux électrodes, une positive et une négative, capables toutes deux de capter ou céder des électrons et baignant dans un électrolyte. Lors d'une décharge, les réactions électrochimiques spontanées se produisant au niveau de l'électrode positive et de l'électrode négative permettent la génération d'un courant électrique continu. Les électrons se déplacent, en passant par un conducteur (un fil de métal par exemple) de l'électrode négative qui est le siège d'une réaction d'oxydation, à l'électrode positive qui est le siège d'une réaction de réduction. Par exemple, dans le cas d'une batterie plomb-acide, constituée d'une électrode négative en plomb, d'une électrode positive en dioxyde de plomb et d'un électrolyte aqueux d'acide sulfurique, les demi-réactions en décharge sont les suivantes :

A l'électrode positive : $PbO_2 + HSO_4^- + 3H^+ + 2e^- \rightarrow PbSO_4 + 2H_2O$

A l'électrode négative : $Pb + HSO_4^- \rightarrow PbSO_4 + H^+ + 2e^-$

La réaction globale simplifiée est la suivante :

$$PbO_2 + Pb + 2H_2SO_4 \rightarrow 2PbSO_4 + 2H_2O$$

Cette réaction de double sulfatation (car du sulfate de plomb se forme au niveau des deux électrodes) a pour conséquence de consommer l'acide sulfurique présent dans l'électrolyte, et de produire de l'eau. Lorsqu'il y a décharge complète de la batterie, l'électrolyte sera composé uniquement d'eau distillée et les plaques seront sulfatées

Lors d'une charge, les réactions inverses se produisent. Dans l'exemple d'une batterie au plomb, les deux polarités se désulfatent, les électrodes sont alors chimiquement reconstituées et l'acidité de l'électrolyte est retrouvée.

Cependant, au fil des charges et décharges, on observe une accumulation d'une fiche couche cristalline par un processus de dissolution / recristallisation sur les électrodes, ce qui a pour effet de diminuer leur surface active et d'augmenter la résistance interne de la batterie. Dans notre exemple, on observe une réorganisation des cristaux de sulfates de plomb, ce qui conduit à la formation d'amas de sulfate de plomb difficilement réversible lors de la phase de charge. Cela a pour conséquence de diminuer la capacité de la batterie (on entend par capacité l'énergie susceptible d'être emmagasinée et restituée par la batterie), jusqu'à ce que celle-ci soit mise au rebut.

En raison des enjeux écologiques actuels, de nombreuses solutions sont destinées au recyclage ou au réemploi des déchets industriels. C'est le cas des batteries pour lesquelles sont proposées solutions de régénération qui ont pour but de forcer la dissolution de ces couches cristallines. Généralement, la méthode consiste à envoyer sur les électrodes des impulsions électriques de fortes puissances, généralement à basse fréquence (typiquement quelques centaines de hertz). Sous l'effet des impulsions, les couches cristallines qui sont plus résistives que les électrodes, vont entrer en résonnance. Le choc électrique se transforme alors en choc mécanique, ce qui amorce et facilite la dissolution des cristaux. Ainsi, la surface active des électrodes est récupérée, et la capacité de la batterie augmente significativement. Les batteries ainsi traitées recouvrent des fonctions d'emmagasinage et de conductivité électrique substantiellement proches de celles d'une batterie neuve.

Les documents EP0704112, EP2377196, WO0077911, US6856118B1, ou encore WO2006041378 divulguent certaines de ces solutions. L'ensemble de ces solutions connues affichent des performances variées, notamment sur le temps nécessaire et le nombre de cycle de charge/décharge pour la régénération complète de la batterie, certaines solutions étant plus rapides et mieux optimisées.

Cependant, toutes ces solutions ont pour point commun de ne pouvoir régénérer qu'une seule batterie à la fois. Ainsi, si dans le cadre d'un contexte applicatif pour lequel un nombre très important de batterie doit être régénéré, vu qu'il faut à minima multiplier le temps de régénération d'une batterie par le nombre de batterie à régénérer pour déterminer un temps global de procédure (dans la mesure où pourrait également être pris en compte le temps de connexion et de déconnexion par un opérateur d'une batterie au dispositif de régénération), cela signifie que les dispositifs et les procédés présentés peuvent potentiellement engendrer une diminution drastique de la productivité/du rendement dans la régénération d'un ensemble de plusieurs batteries, avec un temps global de procédure trop long.

Un exemple de dispositif de régénération de plusieurs batteries comprenant un générateur de courant pulsé alimentant une ligne principale se divisant en plusieurs lignes secondaires via des boîtiers de dérivation peut être trouvé dans le document FR2955000A1.

**[Résumé de l'invention]**

Aussi, l'invention se propose de répondre à cette problématique de régénération de nombreuses batteries en même temps, et donc d'augmentation en termes de productivité et d'optimisation du procédé, tout en restant économiquement intéressant.

Un but de l'invention est donc de proposer un système de régénération comprenant au moins deux lignes de régénération au bout de chacune desquelles est raccordé un jeu de plusieurs batteries d'accumulateur, de sorte que la régénération est réalisée simultanément sur chacune des au moins deux lignes de régénération.

Ainsi, l'invention propose un système de régénération pour une régénération de plusieurs batteries d'accumulateurs à régénérer, par exemple des batteries en Plomb ou en Nickel-Cadmium, comprenant un transformateur de puissance délivrant sur une sortie un signal alternatif sinusoïdal, un banc de décharge délivrant sur une sortie un courant de décharge, et au moins deux lignes de régénération,

dans lequel chacune des au moins deux lignes de régénération comprend :

- une sortie de ligne prévue pour être reliée à un jeu de batteries d'accumulateurs dédié parmi les plusieurs batteries d'accumulateurs à régénérer ;
- un module de conversion relié à la sortie du transformateur, pour une conversion dudit signal alternatif sinusoïdal en un signal de charge composé d'un train d'impulsions de charge comprenant des impulsions de charge successives, deux impulsions de charge successives étant séparées par un temps de pause ;
- un commutateur commandé qui est disposé en sortie du module de conversion et qui est configurable dans une configuration de charge associée à une phase de charge et dans laquelle ledit commutateur commandé connecte le module de conversion à la sortie de ligne et déconnecte le banc de décharge de la sortie de ligne, et dans une configuration de décharge associée à une phase de décharge et dans laquelle ledit commutateur commandé connecte le banc de décharge à la sortie de ligne et déconnecte le module de conversion de la sortie de ligne ;

et dans lequel ledit système de régénération comprend en outre une unité de contrôle/commande reliée au module de conversion et au commutateur commandé de chacune des au moins deux lignes de régénération, ladite unité de contrôle/commande étant configurée pour, en phase de charge, piloter les modules de conversion des au moins deux lignes de régénération pour que leurs signaux de charge respectifs soient décalés temporellement, de sorte que chaque impulsion de charge du signal de charge délivré sur la sortie de ligne de l'une des au moins deux lignes de régénération coïncide avec le temps de pause du signal de charge délivré sur la sortie de ligne de l'autre ou chacune des autres des au moins deux lignes de régénération.

Autrement dit, le système de régénération proposé repose sur le concept de régénération d'une batterie au moyen d'au moins un cycle de régénération comprenant une phase de charge et une phase de décharge, pour lequel durant la phase de charge (respectivement la phase de décharge) est envoyé sur la batterie un signal de charge sous forme d'impulsions de charge (respectivement un courant de décharge).

Plus précisément, le système de régénération comprend un transformateur unique (ou commun aux différentes lignes de régénération) délivrant un signal alternatif sinusoïdal simultanément sur les entrées de plusieurs lignes de régénération, à minima deux, en sortie de chacune desquelles est relié un jeu de batteries, chaque jeu de batteries pouvant comprendre une seule batterie ou plusieurs batteries mises en série, et la ou chaque batterie du jeu de batteries pouvant comprendre un seul ou plusieurs accumulateurs.

Selon l'invention, chacune des lignes de régénération comprend en entrée un module de conversion ayant pour rôles de convertir, pendant la phase de charge, le signal alternatif sinusoïdal transmis par le transformateur en un train d'impulsions de charge composé par définition de plusieurs impulsions de charge successives, deux impulsions de charge successives étant séparées par un temps de pause ; puis d'envoyer le train d'impulsions de charge vers la sortie de la ligne de régénération, à destination du jeu de batteries associé.

Le système de régénération comprend aussi un banc de décharge unique connecté aux sorties des différentes lignes de régénération, via les commutateurs commandés, et dont le rôle est d'envoyer sur le jeu de batteries de chacune des lignes de régénération un courant de décharge pendant la phase de décharge.

L'envoi d'impulsions de charge pendant la phase de charge et du courant de décharge pendant la phase de décharge sur un jeu de batterie d'une ligne de régénération est assuré par un commutateur commandé disposé à la sortie de la ligne, en sortie du module de conversion. Pour chacune des lignes de régénération, dans une première configuration correspondant à la phase de charge, le commutateur commandé connecte les modules de conversion aux sorties des lignes de régénération tout en déconnectant le banc de décharge de ces dites sorties. Dans une seconde configuration correspondant à la phase de décharge, le commutateur commandé déconnecte les modules de conversion des sorties de leur ligne de régénération respective tout en connectant le banc de décharge de ces dites sorties.

Les modules de conversion et les commutateurs commandés de chacune des lignes de régénération sont pilotés par l'unité de contrôle/commande également comprise dans le système de régénération.

L'unité de contrôle/commande est configurée pour piloter, lors de la phase de charge, les modules de conversion de chacune des lignes de régénération pour que les trains d'impulsions de charge qu'elles génèrent respectivement soient décalés temporellement, de sorte que chaque impulsion de charge du train d'impulsions de charge délivré en sortie d'une ligne de régénération coïncide avec le temps de pause du ou des trains d'impulsions de charge délivrés en sortie de la ou des autres lignes de régénération.

Avantageusement, la proposition d'une solution comprenant plusieurs lignes de régénération et basée sur une gestion d'émissions sur ces dites lignes d'impulsions de charge décalées temporellement sur une même période permet un traitement en simultané de plusieurs jeux de plusieurs batteries. L'invention répond positivement à la problématique exposée auparavant en permettant d'optimiser une procédure de régénération lorsqu'une pluralité de batteries doit être régénérée, cette optimisation se traduisant par une diminution du temps nécessaire pour la réalisation de la procédure, et donc une amélioration de la productivité/du rendement.

Un autre avantage de l'invention est qu'elle peut être utilisée pour la régénération d'au moins deux technologies de batteries, les batteries au plomb et les batteries Ni-Cd, quel que soit le type de batterie appartenant à l'une ou l'autre des deux technologies.

Selon une caractéristique de l'invention, le module de conversion de chacune des au moins deux lignes de régénération comprend un dispositif redresseur conformé au moins pour un redressement du signal alternatif sinusoïdal en un signal redressé

Autrement dit, les impulsions de charge générées par le module de conversion à partir du signal alternatif sinusoïdal délivré par le transformateur de chacune des lignes de régénération sont d'amplitude positive. Ainsi, le module de conversion comprend un dispositif redresseur qui à minima, avant la génération des impulsions de charge, a pour fonction de redresser le signal alternatif sinusoïdal en un signal redressé.

Selon un mode de réalisation de l'invention, le dispositif redresseur est un redresseur double alternance triphasé à thyristors.

L'invention proposée peut, dans un mode de réalisation, être proposée pour la régénération de batteries triphasées. Le système de régénération comprend alors un transformateur unique délivrant sur chacune des lignes de régénération un signal triphasé, lesquelles comprennent en entrée un redresseur double alternance triphasé à thyristors utilisé comme redresseur et comme convertisseur.

De manière connue et avantageusement, un redresseur double alternance triphasé à thyristors permet de redresser un signal triphasé en un signal redressé de fréquence six fois supérieure, mais également de faire varier les grandeurs électriques délivrées en sortie en commandant l'ouverture et la fermeture de chacun des thyristors, c'est-à-dire les faire passer d'un état bloqué à un état passant et réciproquement pour laisser passer ou non un courant électrique, par application sur leur gâchette d'un courant de gâchette. Dans le cadre de ce mode de réalisation, l'unité de contrôle/-commande pilote l'ouverture puis la fermeture des thyristors afin de générer à partir de l'amplitude du signal redressé les impulsions de charge.

D'un point de vue fonctionnel, il est prévu que l'ouverture des thyristors soit faite progressivement, l'intensité des impulsions de charge augmentant lorsque l'ouverture des thyristors devient de plus en plus importante. Lorsque l'intensité des impulsions de charge envoyées vers le jeu de batterie devient conforme/équivalent à un courant de consigne, qui correspond au courant devant être envoyé au jeu de batteries pour le régénérer, l'unité de contrôle/commande ferme les thyristors afin de maintenir/stabiliser l'intensité des impulsions de charge à cette valeur de courant de consigne. A noter que lorsque le train d'impulsions de charge est envoyé sur le jeu de batterie concerné, avec le commutateur commandé fonctionnant comme un interrupteur fermé, le jeu de batteries est sollicité pour produire du courant alors qu'un court-circuit se forme simultanément entre le jeu de batteries et le secteur.

Selon une caractéristique de l'invention, pendant la phase de charge, l'unité de contrôle/commande est conformée pour mesurer en continu sur chacune des au moins deux lignes de régénération une amplitude du signal redressé.

Les impulsions de charge qui sont envoyées sur une batterie sont telles que leur amplitude est adaptée à la capacité actuelle, c'est-à-dire l'état de charge, de la batterie, en vue d'améliorer/d'augmenter cette dernière une fois l'ensemble des impulsions de charge envoyées. C'est pourquoi, l'unité de contrôle/commande mesure en temps réel/en continu l'amplitude du signal redressé en vue de piloter le module de conversion pour générer les impulsions de charge lorsque cette amplitude est adaptée pour charger le jeu de batterie situé en sortie de ligne, cela pour chacune des lignes de régénération. En effet, les batteries reliées aux sorties de chacune des lignes de régénération peuvent être de différents types, comme être du même type mais sans pour autant avoir à un instant t la même capacité.

Par exemple, une première batterie de type A sur une première ligne de régénération peut se charger plus vite qu'une seconde batterie de type A sur une seconde ligne même si on applique les mêmes impulsions de charge, car bien plus vétuste. Un avantage de l'invention est donc, lors du traitement simultané de plusieurs jeux de batteries sur différentes lignes de régénération, de pouvoir d'une part déclencher des générations d'impulsions de charge décalées temporellement entre une ligne de régénération et les autres, mais d'autre part également de déclencher ces générations sur des amplitudes du signal redressé différentes.

Selon une caractéristique de l'invention, pour chacune des au moins deux lignes de régénération, est paramétré dans l'unité de contrôle/commande un profil d'impulsion de charge du signal de charge associé qui comprend une durée d'impulsion, une amplitude de seuil, le temps de pause, et un courant de consigne.

Avantageusement, et en lien avec le point précédent, dans l'unité de contrôle/ommande peuvent être paramétrés en amont de la phase de charge un profil d'impulsion de charge propre à chacune des lignes de régénération, le profil d'impulsion de charge étant adapté à la capacité actuelle du jeu de batteries relié à la ligne de régénération pour le charger au mieux et améliorer sa capacité.

Dans chaque profil d'impulsion de charge sont renseignés :

- une amplitude de seuil correspondant à un seuil d'amplitude que l'unité de contrôle/commande va comparer avec l'amplitude du signal redressé, l'unité de contrôle/commande déclenchant au niveau du module de conversion la génération de l'impulsion de charge dès que l'amplitude du signal redressé devient supérieure ou égale à ce seuil.
- une durée d'impulsion correspondant à l'intervalle de temps durant lequel le module de conversion va générer l'impulsion de charge à partir du signal redressé ;
- un temps de pause correspondant à l'intervalle de temps entre deux générations successives d'impulsion de charge ; et
- un courant de consigne qui correspond au courant devant être envoyé au jeu de batterie et adapté à son état de charge actuel en vue de le régénérer.

Dans un mode de réalisation, une fois que l'amplitude du signal redressé atteint cette amplitude de seuil, l'unité de contrôle/commande ouvre les thyristors du redresseur double alternance triphasé à thyristors de la ligne de régénération associée au profil d'impulsion.

Selon une variante de réalisation de l'invention, le profil d'impulsion de charge, pour chacune des au moins deux lignes de régénération, est paramétré tel que la durée d'impulsion est comprise entre 80 ms et 500 ms, et le temps de pause compris entre 1 et 7 s.

Autrement dit, dans une variante de réalisation donnée et selon les deux points précédents, en vue d'adapter le train d'impulsions de charge à la capacité de la batterie, la durée d'impulsion et le temps de pause pour chaque profil d'impulsion de charge peuvent être renseignés selon une plage de valeurs prédéfinies, la durée d'impulsion pouvant être comprise entre 80 ms et 500 ms (millisecondes), et le temps de pause compris entre 1 et 7 s (secondes). L'ajustement de ces paramètres permet à la fois de maîtriser la montée en tension aux bornes du jeu de batteries et sa température pour éviter tout phénomène de surchauffe.

Selon une caractéristique de l'invention, l'unité de contrôle/commande comprend des systèmes de contrôle de batteries pour mesurer, pour chacune des au moins deux lignes de régénération, au moins un paramètre de fonctionnement du jeu de batteries d'accumulateurs dédié en sortie de ligne, et ladite unité de contrôle/commande étant conformée pour modifier le profil d'impulsion de charge en fonction des mesures dudit au moins un paramètre de fonctionnement.

Autrement dit, l'unité de contrôle/commande comprend au moins un moyen de mesure pour mesurer, au cours d'un cycle de régénération, pour chaque jeu de batteries en sortie de ligne de régénération, au moins un paramètre de fonctionnement représentatif de l'état de fonctionnement dudit jeu de batteries. Selon la valeur de cet au moins un paramètre de fonctionnement, dans le cas où le jeu de batterie ne serait pas substantiellement régénéré à la fin du cycle de régénération, l'unité de contrôle/commande va modifier le profil d'impulsion de charge (c'est-à-dire l'amplitude de seuil et/ou la durée d'impulsion et/ou le temps de pause) associé à la ligne de régénération comprenant le jeu de batterie pour que soit généré lors de la phase de charge du prochain cycle de régénération un train d'impulsions de charge adapté à la capacité actuelle du jeu de batterie.

Selon une caractéristique de l'invention, l'au moins un paramètre de fonctionnement comprend au moins l'un des paramètres suivants :

- une capacité du jeu de batterie d'accumulateurs dédié en sortie de ligne ;
- une tension aux bornes d'au moins un accumulateur de l'une des batteries d'accumulateurs du jeu de batterie d'accumulateurs ;
- une température d'au moins un accumulateur de l'une des batteries d'accumulateurs du jeu de batterie d'accumulateurs.

Autrement dit, pour chacune des lignes de régénération, l'au moins un moyen de mesure de l'unité de contrôle/commande mesure l'au moins un paramètre de fonctionnement du jeu batterie associé, qui peut correspondre à la capacité du jeu de batteries, et/ou la tension et/ou la température d'au moins un accumulateur d'au moins une batterie du jeu de batteries.

En plus de permettre d'évaluer l'état de charge du jeu de batterie, la mesure de la tension et de la température aux bornes d'au moins un accumulateur permet de vérifier que le train d'impulsions de charge n'endommage pas le jeu de batterie. En effet, l'application d'impulsions de charge de trop forte amplitude pourrait par exemple entraîner une surchauffe des batteries pouvant entrainer une autodécharge. A l'inverse, une amplitude trop faible peut favoriser le dépôt d'une couche cristalline résistive sur les électrodes de la batterie/accumulateur (soit, dans le cas des batteries au plomb, accélérer la sulfatation).

Selon une caractéristique de l'invention, l'unité de contrôle/commande est connectée à ou comprend des dispositifs de mesure de courant conformés pour mesurer, au moins pendant la phase de charge, pour chacune des au moins deux lignes de régénération, une intensité des impulsions de charge envoyées au jeu de batteries d'accumulateurs dédié en sortie de ligne, et dans lequel, pour chacune des au moins deux lignes de régénération, ladite unité de contrôle/commande est conformée pour comparer l'intensité des impulsions de charge avec le courant de consigne, et pour maintenir/stabiliser l'intensité des impulsions de charge au courant de consigne lorsqu'elle l'atteint, c'est-à-dire lorsqu'elle devient égale au courant de consigne.

Autrement dit, pour chacune des lignes de régénération, l'unité de contrôle/commande mesure en continu durant la phase de charge, avec les dispositifs de mesure de courant mis à sa disposition, l'intensité des impulsions de charge qui sont envoyées au jeu de batteries associé et la compare avec le courant de consigne qui correspond au courant adapté à l'état actuel de jeu de batteries pour le régénérer.

Si l'intensité des impulsions de charge devient supérieure au courant de consigne, alors le module de conversion stabilise/maintient l'intensité des impulsions de charge au courant de consigne.

Dans le mode de réalisation avec redresseur double alternance triphasé à thyristors, une fois que l'intensité des impulsions de charge devient égale au courant de consigne, l'unité de contrôle/commande ferme les thyristors de ce redresseur.

L'invention concerne aussi un procédé de régénération pour une régénération de plusieurs batteries d'accumulateurs à régénérer, par exemple des batteries en Plomb ou en Nickel-Cadmium, pour lequel est utilisé le système de régénération précédemment décrit, et pour lequel la sortie de ligne de chacune des au moins deux lignes de régénération est reliée à un jeu de batteries d'accumulateurs dédié parmi les plusieurs batteries d'accumulateurs à régénérer,

ledit procédé de régénération comprenant au moins une phase de charge au cours de laquelle sont mises en œuvre concomitamment et pour chacune des au moins deux lignes de régénération :

- une conversion durant laquelle le module de conversion convertit le signal alternatif sinusoïdal en un signal de charge composé d'un train d'impulsions de charge comprenant des impulsions de charge successives, deux impulsions de charge successives étant séparées par un temps de pause ;
- une transmission du signal de charge vers le commutateur commandé dédié qui est configuré dans la configuration de charge ;

et dans lequel, au cours de ladite phase de charge, est mis en œuvre un pilotage, par l'unité de commande contrôle/commande, des modules de conversion des au moins deux lignes de régénération pour que leurs signaux de charge respectifs soient décalés temporellement, de sorte que chaque impulsion de charge du signal de charge délivré sur la sortie de ligne de l'une des au moins deux lignes de régénération coïncide avec le temps de pause du signal de charge délivré sur la sortie de ligne de l'autre ou chacune des autres des au moins deux lignes de régénération.

Autrement dit, le procédé de régénération proposé, et applicable au moins aux technologies de batteries d'accumulateurs au plomb ou Ni-Cd, repose sur une régénération en simultané de plusieurs jeux de batteries, pouvant comprendre au moins une batterie pouvant être constituée d'au moins un accumulateur, par application de cycles de régénération successifs (selon le contexte applicatif, un seul cycle régénération peut éventuellement suffire) mis en œuvre au moyen du système de régénération décrit auparavant, lequel comprend au minimum deux lignes de régénération en sortie de chacune desquelles peut être rattaché un ensemble de batteries. Les phases de charge et de décharge durent respectivement un temps de charge et un temps de décharge.

La phase de charge comprend une conversion par chacun des modules de conversion de chaque ligne de régénération du signal alternatif sinusoïdal en provenance du transformateur en un train d'impulsions de charge pour lequel deux impulsions de charge successives sont séparées temporellement par un temps de pause ; et une transmission du train d'impulsions de charge du module de conversion vers le commutateur commandé se trouvant en sortie de ligne de régénération et qui, configuré dans sa configuration de charge, agit comme un interrupteur fermé en reliant ainsi le module de conversion au jeu de batteries, et comme un interrupteur ouvert au niveau de la sortie du banc de décharge. La conversion est caractérisée en ce que, comme décrit antérieurement, l'unité de contrôle/commande pilote le module de conversion de chacune des lignes de régénération de telle sorte que le train d'impulsions de charge propre à chaque ligne soit décalé temporellement par rapport à l'autre ou aux autres, chaque impulsion de charge du train d'impulsions de charge sur la sortie d'une des lignes de régénération coïncidant avec le temps de pause du ou des trains d'impulsions de charge délivrés sur la sortie de la ou des autres lignes de régénération.

Le procédé de régénération comprend aussi une phase de décharge comprenant une génération par le banc de décharge d'un courant de décharge qui sera appliqué sur un jeu de batteries durant le temps de décharge ; et une transmission du courant de décharge vers le commutateur commandé, qui dans sa configuration de décharge, agit comme un interrupteur fermé entre le banc de décharge et la sortie de ligne de chacune des lignes de régénération, permettant ainsi d'injecter dans chacun des jeux de batteries le courant de décharge. Comme expliqué antérieurement, durant la phase de charge sont envoyées à une fréquence adaptée des impulsions de charge afin que les cristaux constituant la couche cristalline résistive qui s'est formée sur les électrodes de la batterie entrent en résonance et se dissolvent. Cependant, l'énergie transmise par ces impulsions de charge, si elles ont pour effet positif de régénérer la batterie, ont aussi pour inconvénient de provoquer la charge de la batterie. C'est dans le but de réguler la tension aux bornes de la batterie et pour minimiser tout effet de surcharge provoqué par l'envoi des impulsions de charge qu'est envoyé le courant de décharge lors de la phase de décharge.

Le procédé de régénération s'achève dès lors que l'ensemble des jeux de batterie à régénérer sont substantiellement régénérés.

A noter qu'en fonction du nombre de jeu de batteries à régénérer, selon le nombre de lignes de régénération comprises dans le système de régénération, une ou certaines lignes de régénération peuvent être laissées inactives durant la totalité ou une partie d'une procédure globale de régénération. Par exemple : si le nombre de jeu de batterie à régénérer est inférieur au nombre de ligne de régénération, ou encore s'il s'agit de régénérer n+1 jeu de batteries avec un système de régénération comprenant n lignes de régénération (signifiant que lors de la régénération du (n+1)ième jeu de batteries, n jeux de batteries auront été déjà régénérés et donc qu'une seule ligne sera active pendant que les n-1 autres seront inactives).

Selon une caractéristique de l'invention, durant la phase de charge, est mis en œuvre, pour chacune des au moins deux lignes de régénération, un redressement du signal alternatif sinusoïdal en un signal redressé au moyen d'un dispositif redresseur compris dans le module de conversion de chacune des au moins deux lignes de régénération.

Autrement dit, et comme expliqué antérieurement, pour chaque ligne de régénération, le module de conversion procède à un redressement du signal alternatif sinusoïdal, dans le but d'obtenir un signal redressé n'ayant donc par définition que des alternances positives afin de générer lors de la conversion un train d'impulsions de charge positives.

Selon une caractéristique de l'invention, pendant la phase de charge, est mis en œuvre, pour chacune des au moins deux lignes de régénération, une mesure en continu d'une amplitude du signal redressé.

Autrement dit, pendant la phase de charge et pour chacune des lignes de régénération, la mesure de l'amplitude du signal redressé est effectuée en continu/temps réel par l'unité de contrôle/commande, simultanément à la conversion du signal alternatif sinusoïdal et à la transmission du signal de régénération par le module de conversion.

Selon une caractéristique de l'invention, le procédé de régénération comprend, en amont d'une phase de charge, un paramétrage, pour chacune des au moins deux lignes de régénération, d'un profil d'impulsion de charge du signal de charge associé qui comprend une durée d'impulsion, une amplitude de seuil, le temps de pause, et un courant de consigne.

Autrement dit, un opérateur ou l'unité de contrôle/commande du système de régénération effectue un paramétrage du profil d'impulsion de charge associé à chacune des lignes de régénération comprise dans le système de régénération en fonction de l'état de fonctionnement du jeu de batterie en sortie de ligne. Pour chaque profil d'impulsion de charge, sont définies des valeurs pour la durée d'impulsion, l'amplitude d'impulsion, et le temps de pause.

Selon une variante de réalisation de l'invention, le profil d'impulsion de charge, pour chacune des au moins deux lignes de régénération, est paramétré tel que la durée d'impulsion est comprise entre 80 ms et 500 ms, et le temps de pause compris entre 1 et 7 s.

Selon une caractéristique de l'invention, le procédé de régénération comprend, pour chacune des au moins deux lignes de régénération, une mesure d'au moins un paramètre de fonctionnement du jeu de batteries d'accumulateurs dédié en sortie de ligne, et comprenant une modification du profil d'impulsion de charge associé en fonction des mesures dudit au moins un paramètre de fonctionnement.

Autrement dit, au cours du cycle de régénération, l'unité de contrôle/commande utilise des systèmes de contrôle de batteries pour mesurer sur chacun des jeux de batterie au moins un paramètre de fonctionnement représentatif de son état de charge. A la fin du cycle de régénération, et si un ou plusieurs jeux de batteries ne sont pas substantiellement pleinement chargé, l'unité de contrôle/commande va modifier automatiquement les valeurs des paramètres du ou des profils de la ou des lignes de régénération associées au(x) jeu(x) de batteries non pleinement rechargé(s) en vue de l'exécution du cycle de régénération suivant, dans le but que ces valeurs soient adaptées à l'état de charge actuel du ou des jeux de batterie pour une régénération maîtrisée lors du cycle de régénération suivant. A noter que ces valeurs modifiées peuvent être changées par l'opérateur s'il estime que d'autres permettent une meilleure optimisation du cycle de régénération et une recharge plus efficace du ou des jeux de batteries.

Selon une caractéristique de l'invention, l'au moins un paramètre de fonctionnement comprend au moins l'un des paramètres suivants :

- une capacité du jeu de batterie d'accumulateurs dédié en sortie de ligne ;
- une tension aux bornes d'au moins un accumulateur de l'une des batteries d'accumulateurs du jeu de batterie d'accumulateurs ;
- une température d'au moins un accumulateur de l'une des batteries d'accumulateurs du jeu de batterie d'accumulateurs.

Selon une caractéristique de l'invention, le procédé comprend, pour chacune des au moins deux lignes de régénération, une mesure en continu d'une intensité des impulsions de charge envoyées au jeu de batteries d'accumulateurs dédié en sortie de ligne, et dans lequel l'intensité des impulsions de charge est comparée avec le courant de consigne, maintenant/stabilisant l'intensité des impulsions de charge au courant de consigne lorsqu'elle l'atteint, c'est-à-dire lorsqu'elle devient égale au courant de consigne.

**[Brève description des figures]**

D'autres caractéristiques et avantages de la présente invention apparaîtront à la lecture de la description détaillée ci-après, d'un exemple de mise en œuvre non limitatif, faite en référence aux figures annexées dans lesquelles :

[Fig 1] est une vue schématique en perspective d'un banc de charge compris dans le système de régénération selon l'invention;

[Fig 2] est une illustration schématique d'un exemple de réalisation d'un système de régénération selon l'invention, qui est conformé pour régénérer deux jeux de batteries en simultané (représentés ici par deux batteries distinctes) ;

[Fig 3] est un schéma électrique du système de régénération de la Figure 2, dans un exemple de réalisation avec des redresseurs double alternance triphasé à thyristors ;

[Fig 4] est un schéma bloc fonctionnel montrant l'ensemble des éléments compris dans le banc de charge et leurs interactions, incluant dans ce mode de réalisation l'unité de contrôle/commande ;

[Fig 5] est un chronogramme illustrant le principe de génération des signaux de charge dans le système de régénération des Figures 2 et 3, avec deux lignes de régénération, à partir d'un signal alternatif sinusoïdal fourni par un transformateur, qui est ici un transformateur monophasé.

**[Description détaillée d'un ou plusieurs modes de réalisation de l'invention]**

Le procédé de régénération de l'invention propose d'utiliser un système de régénération 1, faisant également l'objet de l'invention, pour régénérer en simultané, selon le mode de réalisation de l'invention, au moins deux jeux de batteries B1, B2 d'accumulateurs comprenant chacun au moins une batterie B1, B2 d'accumulateurs ; chaque jeu de batteries B1, B2 pouvant comprendre par exemple plusieurs batteries d'accumulateurs en série. Dans la suite de la description, seuls deux jeux de batteries B1, B2 seront pris en considération, étant noté que l'invention peut être étendue à plus de deux jeux de batteries B1, B2.

Le procédé de régénération consiste à mettre en œuvre au moins un cycle de régénération, lequel comprend successivement une phase de charge et une phase de décharge durant lesquelles sont envoyées respectivement aux bornes des jeux de batteries B1, B2 d'accumulateurs un signal de charge Vc1, Vc2 respectif et un courant de décharge Id1, Id2 respectif ; les signaux de charge Vc1, Vc2 et les courants de décharge Id1, Id2 appliqués étant adaptés respectivement aux capacités des jeux de batteries B1, B2 concernés afin que les cycles de régénération soient optimisés pour les jeux de batteries B1, B2. Le procédé de régénération s'achève à la fin de l'au moins un cycle de régénération, une fois que les capacités des jeux de batteries B1, B2 soient telles qu'ils sont considérés comme régénérés.

Les signaux de charge Vc1, Vc2 et les courants de décharge Id1 Id2 sont transmis au travers de deux lignes de régénération L1, L2 respectives au bout desquelles sont connectés les jeux de batteries B1, B2 respectifs. Une description plus complète de chacune des lignes de régénération L1, L2 est donnée ultérieurement. Il est par contre entendu que physiquement, les sorties de ligne sL1, sL2 des lignes de régénération L1, L2 sont reliées aux entrées respectives des jeux de batteries B1, B2 d'accumulateurs.

Comme précédemment évoqué, l'architecture du système de régénération 1 peut être conformée pour régénérer en simultané davantage de jeux de batterie, c'est-à-dire trois ou plus. Pour tout jeu de batterie d'accumulateur à traiter en simultanéité doit être rajouté une nouvelle ligne de régénération. Par exemple, le système de régénération 1 peut être en capacité de régénérer un troisième jeu de batterie. Dans ce cas, un troisième signal de charge et un troisième courant de décharge sont successivement appliqués au cours de l'au moins un cycle de régénération du procédé de régénération aux bornes du troisième jeu de batteries d'accumulateur, en étant transmis au moyen d'une troisième ligne de régénération.

Les signaux de charge Vc1, Vc2 sont générés par un banc de charge BC, qui fait partie du système de régénération 1. Selon deux variantes de réalisation de l'invention, le banc de charge BC est soit conformé pour la régénération de jeux de batteries B1, B2 fonctionnant en monophasé, soit conformé pour la régénération de jeux de batteries B1, B2 fonctionnant en triphasé. La nature des signaux de charge Vc1, Vc2 est précisée ultérieurement. Les courants de décharge Id1, Id2 sont générés par un banc de décharge D et appliqués aux jeux de batterie B1, B2 respectifs durant un temps de décharge.

Selon les modes de réalisation du système de régénération 1 et du procédé de régénération associé, les courants de décharge Id1, Id2 peuvent soit être continus, soit consistés en des successions d'impulsions de décharge. Dans le mode de réalisation présenté, les courants de décharge Id1, Id2 sont continus.

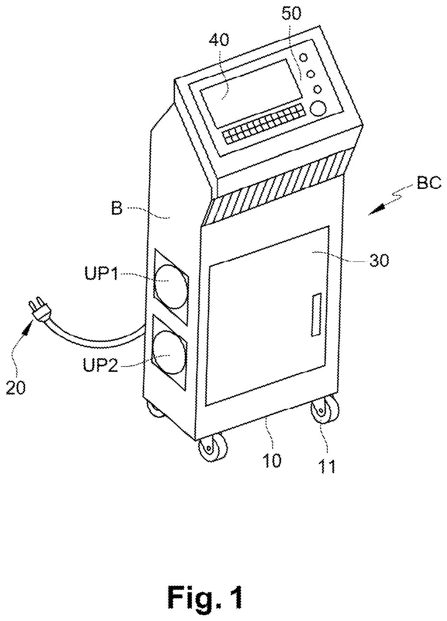

En référence à la Figure 1, un mode de réalisation possible du banc de charge BC comprend un corps principal B présentant :

- une surface inférieure 10 montée sur quatre roues 11 afin que le banc de charge BC puisse être déplacée par un opérateur ;
- une cordon d'alimentation 20 tel qu'une prise électrique pour relier le banc de charge BC à une source de tension alternative commerciale et ainsi alimenter l'ensemble des systèmes qu'elle contient (et qui sont précisés et décrits plus bas) ;
- une porte d'accès 30 pour que l'opérateur puisse avoir accès aux différents systèmes contenus dans le banc de charge BC;
- deux sorties UP1, UP2 latérales permettant de raccorder physiquement le banc de charge BC aux bornes des deux jeux de batteries B1, B2 pour la transmission des signaux de charge Vc1, Vc2.

Dans les variantes de réalisation du système de régénération 1 pour lesquelles davantage de jeux de batterie sont rechargés simultanément, le banc de charge BC doit comprendre autant de sorties latérales qu'il est prévu de jeux de batteries à charger en simultané (par exemple, trois sorties latérales s'il est prévu que le système de régénération 1 régénère trois jeux de batteries en simultané).

Le banc de charge BC comprend en outre :

- une unité d'affichage 40 (comme un écran), par exemple pour afficher les paramètres de configuration de l'au moins un cycle de régénération, contrôler son bon déroulement (avec affichage du temps de traitement restant avant la fin de l'au moins un cycle de régénération), afficher des résultats de mesure comme la tension, et/ou l'intensité, et/ou la capacité du jeu de batteries B1, B2 suite à l'application de l'au moins un cycle de régénération ;
- une unité de réglage 50 (comprenant par exemple un clavier, et/ou un pavé tactile, et/ou des boutons) pour configurer/paramétrer la phase de charge et la phase de décharge de l'au moins un cycle de régénération du procédé de régénération, par exemple définir les caractéristiques des signaux de charge Vc1, Vc2 et des courants de décharge Id1 Id2.

Le banc de charge BC contient également une unité de contrôle/commande UC, qui est une carte électronique, en charge du lancement et de l'exécution de l'au moins un cycle de régénération.

Ainsi, l'unité d'affichage 40 et l'unité de réglage 50 servent d'interface homme-machine entre l'opérateur et un logiciel embarqué dans un microcontrôleur implémenté dans l'unité de contrôle/commande UC.

Dans une autre variante de réalisation de l'invention, l'unité de contrôle/commande UC communique en WiFi avec une station à distance (par exemple un ordinateur de bureau ou portable comprenant un module WiFi) avec laquelle elle échange des informations relatives au paramétrage, au lancement, et au contrôle du procédé de régénération, ainsi qu'aux résultats de mesure obtenus suite à celui-ci. Ainsi, le logiciel qui dans le mode de réalisation présenté est implémenté dans l'unité de contrôle/commande UC est, dans cette autre variante de réalisation, installé sur la station à distance. L'unité de contrôle/commande UC reste néanmoins en charge du pilotage/de l'exécution de la phase de charge et de la phase de décharge de l'au moins un cycle de régénération, la station à distance servant à configurer/paramétrer celui-ci. Il est alors entendu dans ce mode de réalisation précis qu'une unité d'affichage 40 et une unité de réglage 50 n'ont pas besoin d'être intégrés au banc de charge BC.

Comme précédemment indiqué, le banc de charge BC est prévu pour la génération des signaux de charge Vc1, Vc2 envoyés aux jeux de batteries B1, B2. Le banc de charge BC comprend un transformateur G délivrant à sa sortie un signal alternatif sinusoïdal Vg qui, selon les modes de réalisation de l'invention, peut être monophasé ou triphasé en fonction que les jeux de batteries B1, B2 à régénérer fonctionnent en monophasé ou en triphasé.

Le banc de charge BC contient aussi deux modules de conversion CM1, CM2, ayant des entrées respectives reliées à la sortie du transformateur G. Les modules de conversion CM1, CM2 ont pour rôle de convertir le signal alternatif sinusoïdal Vg transmis par le transformateur G en des signaux de charge Vc1, Vc2 associés aux lignes de régénération L1, L2 respectives.

Chacun des modules de conversion CM1, CM2 envoie alors le signal de charge Vc1, Vc2 qu'il a généré vers la sortie UP1, UP2 concernée du banc de charge BC.

Le banc de charge BC comprend aussi deux commutateurs commandés Sw1, Sw2, qui sont des commutateurs 2 vers 1, c'est-à-dire ayant respectivement deux premières entrées e1, e4, deux secondes entrées e2, e3, et deux sorties s1, s2.

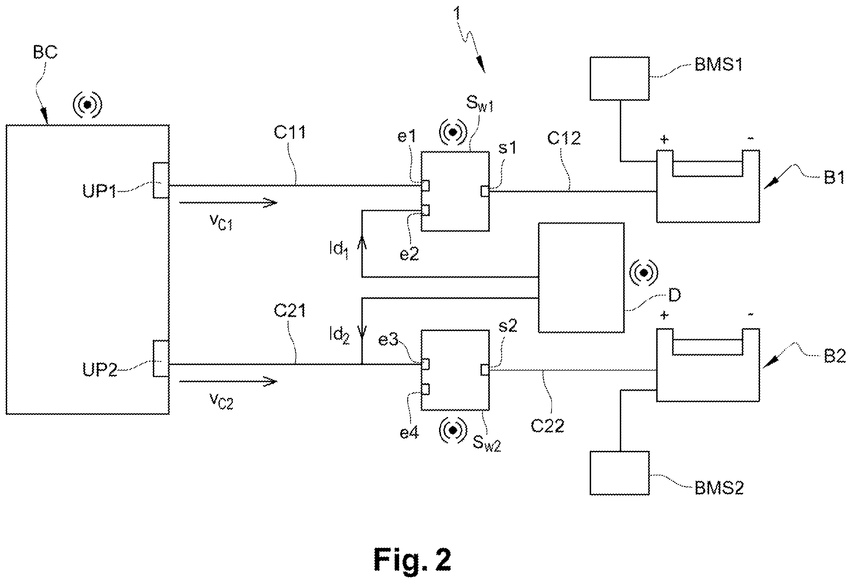

En référence à la Figure 2, les premières entrées e1, e4 respectives des commutateurs commandés Sw1, Sw2 sont connectées aux sorties UP1, UP2 respectives du banc de charge BC ; les secondes entrées e2, e3 respectives sont quant à elles connectées à deux sorties respectives d'un banc de décharge D (autre élément faisant partie du système de régénération 1), chacune des sorties du banc de décharge D fournissant un courant de décharge Id1, Id2 respectif. Les sorties s1, s2 des commutateurs commandés Sw1, Sw2 sont reliées aux jeux de batteries B1, B2 respectifs. Le banc de décharge D ainsi que les deux commutateurs commandés Sw1, Sw2 sont alimentés en étant branchés à une source de tension alternative commerciale.

Les deux commutateurs commandés Sw1, Sw2 sont configurables :

- dans une configuration de charge associée à la phase de charge durant laquelle : ils sont déconnectés du banc de décharge D, et transmettent aux jeux de batteries B1, B2 auxquels ils sont reliés les signaux de charge Vc1, Vc2 respectifs ;
- dans une configuration de décharge associée à la phase de décharge durant laquelle : ils sont déconnectés des deux modules de conversion CM1, CM2, et transmettent aux jeux de batteries B1, B2 auxquels ils sont reliés les courants de décharge Id1, Id2 respectifs.

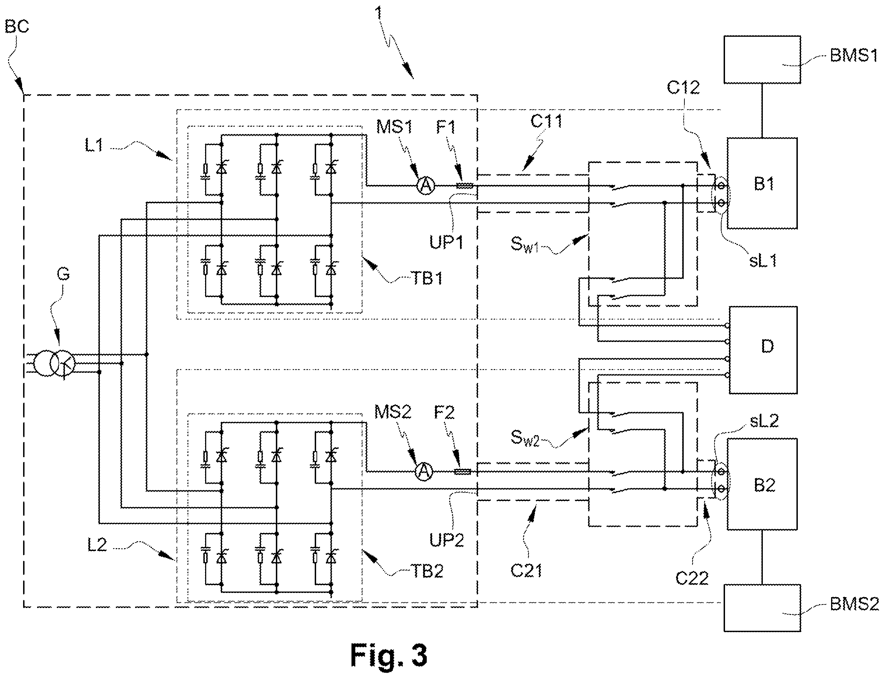

En référence à la Figure 3, dans le mode de réalisation de l'invention présenté, les deux commutateurs commandés Sw1, Sw2 sont des systèmes d'interrupteurs s'ouvrant et se fermant pour faire ou non passer les signaux de charge Vc1, Vc2 ou les courants de décharge Id1, Id2 selon dans quelle configuration ils se trouvent. Les interrupteurs sont ouverts et fermés par chacun des deux commutateurs commandés Sw1, Sw2 suite à la réception d'une information en provenance de l'unité de contrôle/commande UC indiquant, au démarrage de chaque phase de l'au moins un cycle de régénération, si ladite phase est une phase de charge ou une phase de décharge. Les deux commutateurs commandés Sw1, Sw2 peuvent comprendre un module radiofréquence pour communiquer en WiFi avec l'unité de contrôle/commande UC.

Ainsi, au sens de l'invention, chacune des deux lignes de régénération L1, L2 est définie/constituée par un des deux modules de conversion CM1, CM2 et un des deux commutateurs commandés Sw1, Sw2. L'entrée physique de chacune des deux lignes de régénération L1, L2 correspond à l'entrée de son module de conversion CM1, CM2 associé. La sortie physique de chacune des deux lignes de régénération L1, L2 correspond quant à elle, comme indiqué antérieurement, à la sortie s1, s2 du commutateur commandé Sw1, Sw2 correspondant ou à la borne d'entrée du jeu de batteries B1, B2 qu'elle doit régénérer.

Selon des variantes de réalisation du système de régénération 1 comprenant plus que les deux lignes de régénération L1 , L2, toute nouvelle ligne de régénération ajoutée au système de régénération 1 implique d'adapter l'architecture du banc de charge BC afin d'y intégrer un module de conversion supplémentaire, et qu'il comprenne une sortie additionnelle permettant de connecter ledit module de conversion supplémentaire à un commutateur commandé supplémentaire dont la sortie sera reliée à un jeu de batteries supplémentaire.

Chacun des deux modules de conversion CM1, CM2 est relié à la première entrée e1, e4 du commutateur commandé Sw1, Sw2 auquel il est associé au moyen de premiers câbles C11, C21 dont les deux extrémités sont respectivement connectées aux deux sorties UP1, UP2 du banc de charge BC et aux premières entrées e1, e4. Les sorties s1, s2 des deux commutateurs commandés Sw1, Sw2 sont connectées physiquement aux deux jeux batteries B1, B2 respectifs au moyen de seconds câbles C12, C22.

Les signaux de charge Vc1, Vc2 envoyés aux jeux de batterie B1, B2 et générés par les deux modules de conversion CM1, CM2 à partir du signal alternatif sinusoïdal Vg fourni par le transformateur G consistent en des train d'impulsions de charge P1, P2. Plus précisément, une fois arrivé en entrée de chacun des deux modules de conversion CM1, CM2, le signal alternatif sinusoïdal Vg est redressé en un signal redressé Vr par deux dispositifs redresseurs R1, R2 compris dans chacun des deux de conversion CM1, CM2. Ensuite, chacun des deux modules de conversion génère à partir de ce signal redressé Vr un train d'impulsions de charge P1, P2 selon le principe de fonctionnement décrit ci-après.

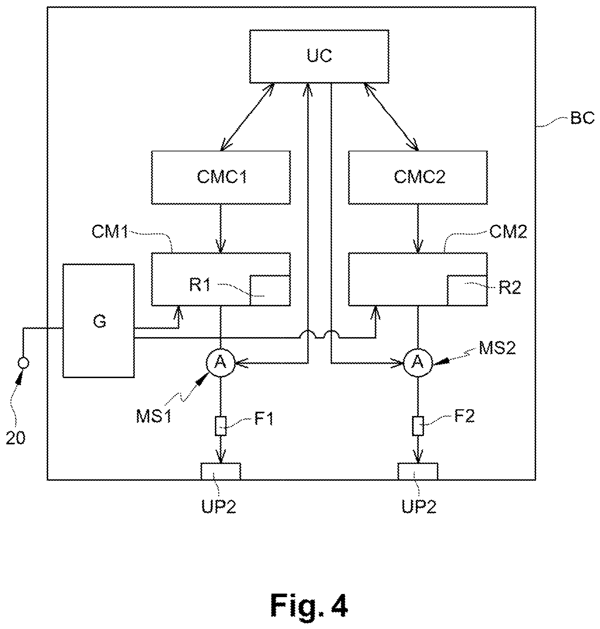

Les impulsions de charge P1, P2 comprises dans les signaux de charge Vc1, Vc2 générés par les modules de conversion CM1, CM2 sont définies selon des profils d'impulsion de charge PP1, PP2 qui sont renseignés par l'opérateur du système de régénération 1, à partir, dans ce mode de réalisation, de l'unité de réglage 50 du banc de charge BC (ou dans un autre mode de réalisation, à partir d'un logiciel de paramétrage installé sur une station à distance). Dans le mode de réalisation présenté, en référence à la Figure 4, l'unité de contrôle/commande UC transmet alors les profils d'impulsion de charge PP1, PP2 à deux cartes de pilotage CMC1, CMC2 qui sont contenues dans le banc de charge BC et qui sont connectées aux modules de conversion CM1, CM2 respectifs. Ainsi, l'unité de contrôle/commande UC est indirectement reliées aux deux modules de conversion CM1, CM2, pour les piloter dans le procédé de régénération.

Les deux cartes de pilotage CMC1, CMC2 intègrent chacune un logiciel embarqué dans un microcontrôleur pour le pilotage des deux modules de conversion CM1, CM2 afin qu'ils génèrent les impulsions de charge P1, P2 des signaux de charge Vc1, Vc2, à partir du signal alternatif sinusoïdal Vg transmis par le transformateur G. L'unité de contrôle/-commande UC et les deux cartes de pilotage CMC1, CMC2 sont équipées de ports bidirectionnels afin de pouvoir être interfacées et communiquer.

Dans une variante de réalisation, les éléments des cartes de pilotage CMC1, CMC2 sont implémentés dans l'unité de contrôle/commande UC, signifiant qu'elle est directement reliée aux deux modules de conversion CM1, CM2 et qu'elle les pilote directement.

Les deux cartes de pilotage CMC1, CMC2 acquièrent/mesurent en continu le signal redressé Vr et, selon des variantes de réalisation, également le signal alternatif sinusoïdal Vg, puis envoient la ou les mesures à l'unité de contrôle/commande UC, qui selon les variantes de réalisation : les fait afficher par le biais de l'unité d'affichage 40 ; ou les envoie à la station distante, le logiciel installé dessus se chargeant alors de l'affichage.

Chacun des deux profils d'impulsion de charge PP1, PP2 comprend l'ensemble des paramètres suivants :

- une durée d'impulsion d1, d2 ;
- une amplitude de seuil Vt1, Vt2 ;
- un temps de pause toff1, toff2 ; et
- un courant de consigne Ic1, Ic2.

Les valeurs renseignées par l'opérateur (ou établies de manière automatisée) pour l'ensemble des paramètres des deux profils d'impulsion de charge P1, P2 sont respectivement adaptés aux capacités/états de charge que présentent, avant le lancement de la phase de charge, les deux jeux de batteries B1, B2 auxquels les profil d'impulsion de charge P1, P2 sont associés, en vue de les régénérer le plus efficacement possible.

Sur une période de signal T, les impulsions de charge P1, P2 des signaux de charge Vc1, Vc2 sont générées pendant des durées d'impulsion d1, d2. Autrement, les signaux de charge Vc1, Vc2 sont inactifs durant des temps de pause toff1, toff2. Autrement dit, deux impulsions de charge P1 successives (respectivement deux impulsions de charge P2 successives) sont générées telles qu'elles sont séparées dans le temps par le temps de pause toff1 (respectivement toff2).

Conformément à l'invention, afin de régénérer en simultané les deux jeux de batteries B1, B2 à partir d'un même signal alternatif sinusoïdal Vg transmis par le transformateur G commun, les signaux de charges Vc1, Vc2 sont générés de sorte qu'ils soient décalés temporellement.

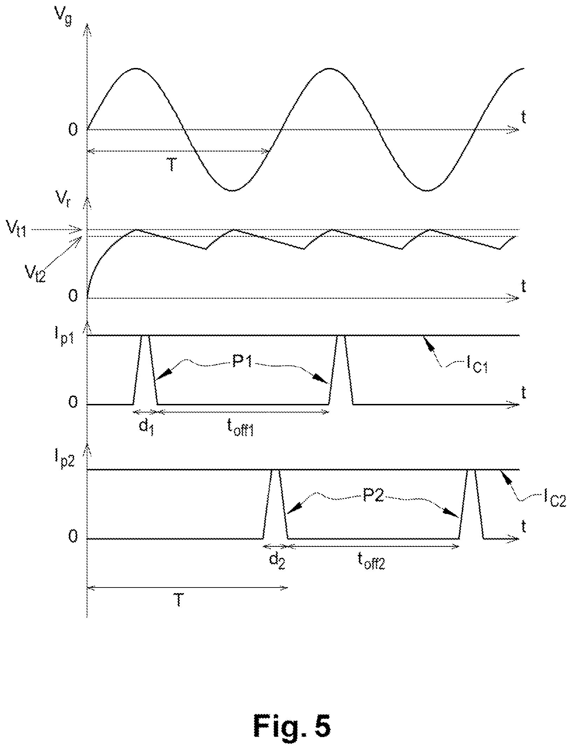

Plus précisément, en référence à la Figure 5, les impulsions de charge P1 (respectivement P2) du signal de charge Vc1 (respectivement Vc2) sont générées pendant une durée d'impulsion d1 (respectivement d2) coïncidant avec le temps de pause toff2 (respectivement toff1) des impulsions de charge P2 (respectivement P1) de l'autre signal de charge Vc2 (respectivement Vc1).

Selon la conception de l'invention, l'opérateur peut paramétrer les durées d'impulsion d1, d2 des impulsions de charge P1, P2 telles qu'elles puissent être comprises entre 80 ms et 500 ms, et les temps de pause toff1, toff2 compris entre 1 s et 7 s.

Les deux cartes de pilotage CMC1, CMC2 déclenchent, sur un ordre de commande en provenance de l'unité de contrôle/commande UC, la génération par les modules de conversion CM1, CM2 des impulsions de charge P1, P2 lorsque l'amplitude du signal redressé Vr devient supérieure ou égale à deux amplitudes de seuil Vt1, Vt2. Afin d'assurer la régénération simultanée des au moins deux jeux de batteries B1, B2, les générations de l'impulsion de charge P1 et de l'impulsion de charge P2 sont déclenchées par la carte de pilotage CMC1 et la carte de pilotage CMC2 sur des alternances différentes du signal redressé Vr.

Deux dispositifs de mesure de courant MS1, MS2 (par exemple, des capteurs de courant) positionnés aux sorties respectives des modules de conversion CM1, CM2 pour mesurer en continu les intensités Ip1, Ip2 des impulsions de charge P1, P2 au cours de leurs générations. Les mesures des intensités Ip1, Ip2 sont envoyées aux carte de pilotage CMC1, CMC2 qui comparent les intensités Ip1, Ip2 à des courants de consigne Ic1, Ic2 qui correspondent aux courants devant être envoyés aux deux jeux de batteries B1, B2 pour les régénérer le plus efficacement possible. Dans le cas où les intensités Ip1, Ip2 des impulsions de charge P1, P2 deviendraient supérieures aux courants de charge Ic1, Ic2, les modules de conversion CM1, CM2 sont conformés pour maintenir/stabiliser les intensité Ip1, Ip2 des impulsions de charge P1, P2 aux valeurs des courants de consigne Ic1, Ic2.

Dans le mode de réalisation présenté, les modules de conversion CM1, CM2 sont des redresseurs double alternance triphasé à thyristors TB1, TB2 (Figure 3), qui sont également utilisés comme dispositifs redresseurs R1, R2 pour redresser le signal alternatif sinusoïdal Vg en un signal redressé Vr.

Ainsi, les cartes de pilotage CMC1, CMC2 sont dans ce mode de réalisation des cartes de commande pour pont à thyristors servant à piloter chacun des six thyristors compris dans chacun des deux redresseurs double alternance triphasé à thyristors TB1, TB2. Ces cartes de pilotage CMC1, CMC2 permettent de piloter les redresseur double alternance triphasé à thyristors TB1, TB2 en monophasé ou en triphasé, mais aussi de commander l'ouverture et la fermeture de chacun des six thyristors en agissant sur le réglage de leurs caractéristiques comme le courant de gâchette, le temps d'ouverture, la rampe de tension appliquée en direct.

Les cartes de pilotage CMC1, CMC2 des redresseurs double alternance triphasé à thyristors TB1, TB2 commandent les ouvertures des thyristors lorsque l'amplitude du signal redressé Vr devient égale aux amplitudes de seuil Vt1, Vt2. L'ouverture des thyristors est faite progressivement, les intensités Ip1, Ip2 des impulsions de charge P1, P2 augmentent lorsque l'ouverture des thyristors devient de plus en plus importante. Lorsque les intensités Ip1, Ip2 des impulsions de charge P1, P2 deviennent supérieures ou égales aux courants de consigne Ic1, Ic2, les cartes de pilotage CMC1, CMC2 ferment les thyristors afin de maintenir/stabiliser les intensités Ip1, Ip2 des impulsions de charge P1, P2 aux valeurs des courants de consigne Ic1, Ic2.

L'opérateur renseigne les caractéristiques des thyristors des deux redresseurs double alternance triphasé à thyristors TB1, TB2, particulièrement leurs conditions d'ouverture et de fermeture, à partir par exemple de l'unité de réglage 50 (ou selon une autre variante de réalisation de l'invention, à partir du logiciel installé dans la station à distance). L'unité de contrôle/commande UC transmet alors ces informations aux deux cartes de pilotage CMC1, CMC2, chacune pilotant le redresseur double alternance triphasé à thyristors TB1, TB2 auquel elle est associée en fonction de ces informations, des profils d'impulsion de charge PP1, PP2, et des mesures en continu du signal redressé Vr et des intensités Ip1, Ip2 des impulsions de charge P1, P2.

L'unité de contrôle/commande UC communique avec une carte électronique de puissance conçue pour le banc de décharge D et implémentée à l'intérieur de celui-ci pour la génération des courants de décharge Id1, Id2 envoyés respectivement dans les deux jeux de batteries B1, B2. Les intensités des courants Id1, Id2 et les temps de décharge pendant lesquels ils sont appliqués sont adaptés pour réguler le plus efficacement possible les tensions aux bornes des deux jeux de batterie B1, B2 et minimiser l'effet de surcharge provoqué par l'envoi des signaux de charge Vc1, Vc2 lors de la phase de charge.

L'architecture de la carte électronique de puissance du banc de décharge D comprend : un module radiofréquence pour la communication en WiFi avec l'unité de contrôle/commande UC ; et un microcontrôleur conformé pour recevoir et exécuter les ordres de commande de l'unité de contrôle/commande UC. Les caractéristiques de la phase de décharge (intensités des courants de décharge Id1, Id2 ; temps d'application...) sont configurées par l'opérateur selon les modes de réalisation de l'invention soit à partir de l'unité de réglage 50 du banc de charge BC, soit à partir du logiciel installé sur la station à distance. Selon deux variantes de réalisation de l'invention, les courants de décharges Id1, Id2 peuvent soit correspondre à des trains d'impulsion de décharge, soit à des courants continus. Dans le mode de réalisation présenté, les courants de décharge Id1, Id2 sont des courants continus.

Chacun des deux jeux de batteries B1, B2 est relié à un système de contrôle de batteries BMS1, BMS2 qui communique avec l'unité de contrôle/commande UC et lui transmet au moins un paramètre de fonctionnement du jeu de batteries B1, B2 associé. Cet au moins un paramètre de fonctionnement renvoyé par chacun des deux systèmes de contrôle de batteries BMS1, BMS2 peut correspondre à :

- la capacité du jeu de batterie B1, B2 auquel il est relié,
- une tension aux bornes d'au moins un accumulateur d'une batterie B1, B2 du jeu de batterie B1, B2,
- une température d'au moins un accumulateur de l'une des batteries B1, B2 du jeu de batteries B1, B2.

Une fois la mesure du ou des paramètres de fonctionnement reçue, l'unité de contrôle/commande UC, dans une première variante de réalisation de l'invention, l'affiche au moyen de l'unité d'affichage 40, ou la transmet dans une seconde variante de réalisation à la station à distance et sera affichée dans le logiciel installé dessus.

Selon deux variantes de réalisation de l'invention, les deux systèmes de contrôle de batteries BMS1, BMS2 peuvent être alimentés soit en étant branchés à une source de tension alternative commerciale, soit en étant directement connectés au jeu de batteries B1, B2 dont ils doivent mesurer le(s) paramètre(s) de fonctionnement.

Chacun des deux systèmes de contrôle de batteries BMS1, BMS2 comprend un module radiofréquence pour communiquer avec l'unité de contrôle/commande UC. Dans le mode de réalisation présenté, il est prévu que l'unité de contrôle/commande UC et les deux systèmes de contrôle de batteries BMS1, BMS2 comprennent un module pour communiquer au moyen d'un protocole de communication pour les réseaux personnels sans fil à bas débit LR-WPAN. Les deux systèmes de contrôle de batteries BMS1, BMS2 comprennent également un microcontrôleur pour recevoir les ordres de commande de l'unité de contrôle/commande UC et lui transmettre les résultats de mesure du ou des paramètres de fonctionnement des deux jeux de batteries B1, B2.

Les deux systèmes de contrôle de batteries BMS1, BMS2 sont prévus pour fonctionner selon deux modes :

- un mode mesure durant lequel ils mesurent le(s) paramètre(s) de fonctionnement des jeux de batteries B1, B2 auquel ils sont associés.
- un mode sommeil durant lequel ils émettent toutes les 2 minutes une trame d'interrogation à l'unité de contrôle/-commande UC pour déterminer s'ils doivent passer en mode mesure. Lorsqu'ils sont dans le mode mesure, chacun des deux systèmes de contrôle de batteries BMS1, BMS2 revient dans le mode sommeil une fois que la mesure du ou des paramètres de fonctionnement du jeu de batteries B1, B2 est mesuré.

Selon deux variantes de réalisation de l'invention, pendant le mode mesure, le(s) paramètre(s) de fonctionnement peuvent être mesurés en continu ou à intervalle de temps régulier durant un temps de mesure. Quelle que soit la variante de réalisation, la procédure de mesure est configurable par l'opérateur. Il est entendu que la configuration de la procédure de mesure est mise en œuvre au moyen de l'unité de réglage 50 selon une variante de réalisation de l'invention, ou au moyen du logiciel installé dans la station à distance selon une autre variante.

Le(s) paramètre(s) de fonctionnement des jeux de batterie B1, B2 sont mesurés pendant et à la fin des phases de charge et décharge. Selon un mode de réalisation de l'invention, si à la fin de l'une ou l'autre des deux phases l'un ou les deux jeux de batteries B1, B2 n'est pas/ne sont pas pleinement régénéré(s), selon la valeur du ou des paramètres de fonctionnement mesurée, l'unité de contrôle/commande UC peut proposer à l'opérateur pour la prochaine phase un jeu de paramètres adaptés pour la rendre la plus efficiente possible, c'est-à-dire : soit un ou des profils d'impulsion de charge PP1, PP2 si la phase venant de s'achever correspondait à la phase de décharge, soit une ou des valeurs de courant de décharge Id1, Id2 si la phase venant de s'achever correspondait à la phase de charge. Il est entendu qu'une optimisation des profils d'impulsion de charge PP1, PP2 induit une optimisation des durées d'impulsions d1, d2 ; et/ou des amplitudes de seuil Vt1, Vt2 ; et/ou des temps de pause toff1, toff2 ; et/ou des courants de consigne Ic1, Ic2.

Lorsque les impulsions de charge P1, P2 sont envoyées aux jeux de batteries B1, B2 respectifs, comme les deux commutateurs commandés Sw1, Sw2 fonctionnent comme des interrupteurs fermés, les jeux de batteries B1, B2 sont sollicités pour produire du courant alors que des courts-circuits se forment simultanément entre les jeux de batteries B1, B2 et le secteur. Pour maîtriser les courts-circuits et afin de ne pas endommager les modules de conversion CM1, CM2 dans le cas où se produirait une surcharge en courant sur l'une et/ou l'autre des au moins deux lignes de régénération L1, L2, deux fusibles F1, F2 peuvent être optionnellement positionnés en série sur les sorties respectives des modules de conversion CM1, CM2.

Le déclenchement des fusibles F1, F2 peut être commandé par l'unité de contrôle/commande UC si une surcharge en courant est mesurée par les dispositifs de mesure de courant MS1, MS2 ; et/ou si des surtensions sont relevées par les deux systèmes de contrôle de batteries BMS1, BMS2 sur le ou les accumulateurs des jeux de batteries B1, B2 qu'ils mesurent.

A noter qu'avant application de l'au moins un cycle de régénération compris dans le procédé de régénération, les capacités des jeux de batteries B1, B2 à régénérer sont mesurées par les systèmes de contrôle de batteries BMS1, BMS2 respectifs, pour déterminer s'ils sont non complètement déchargés. Dans le cas où un jeu de batterie à régénérer présenterait encore un certain état de charge, un courant de décharge lui est appliqué jusqu'à le décharger complètement.

## Revendications

1. Système de régénération (1) pour une régénération de plusieurs batteries (B1, B2) d'accumulateurs à régénérer, par exemple des batteries (B1, B2) en Plomb ou en Nickel-Cadmium, ledit système de régénération (1) comprenant un transformateur (G) de puissance délivrant sur une sortie un signal alternatif sinusoïdal (Vg), un banc de décharge (D) délivrant sur une sortie un courant de décharge (Id1, Id2), et au moins deux lignes de régénération (L1, L2),

dans lequel chacune des au moins deux lignes de régénération (L1, L2) comprend :

- une sortie de ligne (sL1, sL2) prévue pour être reliée à un jeu de batteries (B1, B2) d'accumulateurs dédié parmi les plusieurs batteries (B1, B2) d'accumulateurs à régénérer ;
- un module de conversion (CM1, CM2) relié à la sortie du transformateur (G), pour une conversion dudit signal alternatif sinusoïdal (Vg) en un signal de charge (Vc1, Vc2) composé d'un train d'impulsions de charge (P1, P2) comprenant des impulsions de charge (P1, P2) successives, deux impulsions de charge (P1, P2) successives étant séparées par un temps de pause (toff1, toff2) ;
- un commutateur commandé (Sw1, Sw2) qui est disposé en sortie du module de conversion (CM1, CM2) et qui est configurable dans une configuration de charge associée à une phase de charge et dans laquelle ledit commutateur commandé (Sw1, Sw2) connecte le module de conversion (CM1, CM2) à la sortie de ligne (sL1, sL2) et déconnecte le banc de décharge (D) de la sortie de ligne (sL1, sL2), et dans une configuration de décharge associée à une phase de décharge et dans laquelle ledit commutateur commandé (Sw1, Sw2) connecte le banc de décharge (D) à la sortie de ligne (sL1, sL2) et déconnecte le module de conversion (CM1, CM2) de la sortie de ligne (sL1, sL2);

et dans lequel ledit système de régénération (1) comprend en outre une unité de contrôle/commande (UC) reliée au module de conversion (CM1, CM2) et au commutateur commandé (Sw1, Sw2) de chacune des au moins deux lignes de régénération (L1, L2),

ladite unité de contrôle/commande (UC) étant configurée pour, en phase de charge, piloter les modules de conversion (CM1, CM2) des au moins deux lignes de régénération (L1, L2) pour que leurs signaux de charge respectifs (Vc1, Vc2) soient décalés temporellement, de sorte que chaque impulsion de charge (P1, P2) du signal de charge (Vc1, Vc2) délivré sur la sortie de ligne (sL1, sL2) de l'une des au moins deux lignes de régénération (L1, L2) coïncide avec le temps de pause (toff1, toff2) du signal de charge (Vc1, Vc2) délivré sur la sortie de ligne (sL1, sL2) de l'autre ou chacune des autres des au moins deux lignes de régénération (L1, L2).

2. Système de régénération (1) selon la revendication 1, dans lequel le module de conversion (CM1, CM2) de chacune des au moins deux lignes de régénération (L1, L2) comprend un dispositif redresseur (R1, R2) conformé au moins pour un redressement du signal alternatif sinusoïdal (Vg) en un signal redressé (Vr).

3. Système de régénération (1) selon la revendication 2, dans lequel le dispositif redresseur (R1, R2) est un redresseur double alternance triphasé à thyristors (TB1, TB2).

4. Système de régénération (1) selon la revendication 2 ou 3, dans lequel, pendant la phase de charge, l'unité de contrôle/commande (UC) est conformée pour mesurer en continu sur chacune des au moins deux lignes de régénération (L1, L2) une amplitude du signal redressé (Vr).

5. Système de régénération (1) selon l'une quelconque des revendications précédentes, dans lequel, pour chacune des au moins deux lignes de régénération (L1, L2), est paramétré dans l'unité de contrôle/commande (UC) un profil d'impulsion de charge (PP1, PP2) du signal de charge (Vc1, Vc2) associé qui comprend une durée d'impulsion (d1, d2), une amplitude de seuil (Vt1, Vt2), le temps de pause (toff1, toff2), et un courant de consigne (Ic1, Ic2).

6. Système de régénération (1) selon la revendication 5, dans lequel le profil d'impulsion de charge (PP1, PP2), pour chacune des au moins deux lignes de régénération (L1, L2), est paramétré tel que la durée d'impulsion (d1, d2) est comprise entre 80 ms et 500 ms, et le temps de pause (toff1, toff2) compris entre 1 et 7 s.

7. Système de régénération (1) selon la revendication 5 ou 6, dans lequel l'unité de contrôle/commande (UC) comprend des systèmes de contrôle de batteries (BMS1, BMS2) pour mesurer, pour chacune des au moins deux lignes de régénération (L1, L2), au moins un paramètre de fonctionnement du jeu de batteries (B1, B2) d'accumulateurs dédié en sortie de ligne (sL1, sL2), et ladite unité de contrôle/commande (UC) étant conformée pour modifier le profil d'impulsion de charge (PP1, PP2) en fonction des mesures dudit au moins un paramètre de fonctionnement.

8. Système de régénération (1) selon la revendication 7, dans lequel l'au moins un paramètre de fonctionnement comprend au moins l'un des paramètres suivants :

- une capacité du jeu de batterie (B1, B2) d'accumulateurs dédié en sortie de ligne (sL1, sL2) ;
- une tension aux bornes d'au moins un accumulateur de l'une des batteries (B1, B2) d'accumulateurs du jeu de batterie (B1, B2) d'accumulateurs ;

- une température d'au moins un accumulateur de l'une des batteries (B1, B2) d'accumulateurs du jeu de batterie (B1, B2) d'accumulateurs.

9.  Système de régénération (1) selon l'une quelconque des revendications 5 à 8, dans lequel l'unité de contrôle/commande (UC) est connectée à ou comprend des dispositifs de mesure de courant (MS1, MS2) conformés pour mesurer, au moins pendant la phase de charge, pour chacune des au moins deux lignes de régénération (L1 L2), une intensité (Ip1, Ip2) des impulsions de charge (P1, P2) envoyées au jeu de batteries (B1, B2) d'accumulateurs dédié en sortie de ligne (sL1, sL2), et dans lequel, pour chacune des au moins deux lignes de régénération (sL1, sL2), ladite unité de contrôle/commande (UC) est conformée pour comparer l'intensité (Ip1, Ip2) des impulsions de charge (P1, P2) avec le courant de consigne (Ic1, Ic2), et pour maintenir/stabiliser l'intensité (Ip1, Ip2) des impulsions de charge (Ip1, Ip2) au courant de consigne (Ic1, Ic2) lorsqu'elle l'atteint, c'est-à-dire lorsqu'elle devient égale au courant de consigne (Ic1, Ic2).

10. Procédé de régénération pour une régénération de plusieurs batteries (B1, B2) d'accumulateurs à régénérer, par exemple des batteries en Plomb ou en Nickel-Cadmium, pour lequel est utilisé le système de régénération (1) selon l'une des revendications précédentes, et pour lequel la sortie de ligne (sL1, sL2) de chacune des au moins deux lignes de régénération (L1, L2) est reliée à un jeu de batteries (B1, B2) d'accumulateurs dédié parmi les plusieurs batteries (B1, B2) d'accumulateurs à régénérer, ledit procédé de régénération comprenant au moins une phase de charge au cours de laquelle sont mises en œuvre concomitamment et pour chacune des au moins deux lignes de régénération (L1, L2) :

    - une conversion durant laquelle le module de conversion (CM1, CM2) convertit le signal alternatif sinusoïdal (Vg) en un signal de charge (Vc1, Vc2) composé d'un train d'impulsions de charge (P1, P2) comprenant des impulsions de charge (P1, P2) successives, deux impulsions de charge (P1, P2) successives étant séparées par un temps de pause (toff1, toff2) ;
    - une transmission du signal de charge (Vc1, Vc2) vers le commutateur commandé (Sw1, Sw2) dédié qui est configuré dans la configuration de charge ;

    et dans lequel, au cours de ladite phase de charge, est mis en œuvre un pilotage, par l'unité de commande contrôle/commande (UC), des modules de conversion (CM1, CM2) des au moins deux lignes de régénération (L1, L2) pour que leurs signaux de charge (Vc1, Vc2) respectifs soient décalés temporellement, de sorte que chaque impulsion de charge (P1 P2) du signal de charge (Vc1, Vc2) délivré sur la sortie de ligne (sL1, sL2) de l'une des au moins deux lignes de régénération (L1, L2) coïncide avec le temps de pause (toff1, tof2) du signal de charge (Vc1, Vc2) délivré sur la sortie de ligne (sL1, sL2) de l'autre ou chacune des autres des au moins deux lignes de régénération (L1, L2).

11. Procédé de régénération selon la revendication 10, dans lequel, durant la phase de charge, est mis en œuvre, pour chacune des au moins deux lignes de régénération (L1, L2), un redressement du signal alternatif sinusoïdal (Vg) en un signal redressé (Vr) au moyen d'un dispositif redresseur (R1, R2) compris dans le module de conversion (CM1, CM2) de chacune des au moins deux lignes de régénération (L1, L2).

12. Procédé de régénération selon la revendication 11, dans lequel, pendant la phase de charge, est mis en œuvre, pour chacune des au moins deux lignes de régénération (L1, L2), une mesure en continu d'une amplitude du signal redressé (Vr).

13. Procédé de régénération selon l'une quelconque des revendications 10 à 12, comprenant, en amont d'une phase charge, un paramétrage, pour chacune des au moins deux lignes de régénération (L1, L2), d'un profil d'impulsion de charge (PP1, PP2) du signal de charge (Vc1, Vc2) associé qui comprend une durée d'impulsion (d1, d2), une amplitude de seuil (Vt1, Vt2), le temps de pause (toff1, toff2), et un courant de consigne (Ic1, Ic2).

14. Procédé de régénération selon la revendication 13, dans lequel le profil d'impulsion de charge (PP1, PP2), pour chacune des au moins deux lignes de régénération (L1, L2), est paramétré tel que la durée d'impulsion (d1, d2) est comprise entre 80 ms et 500 ms, et le temps de pause (toff1, toff2) compris entre 1 et 7 s.

15. Procédé de régénération selon la revendication 13 ou 14, comprenant, pour chacune des au moins deux lignes de régénération (L1, L2), une mesure d'au moins un paramètre de fonctionnement du jeu de batteries (B1, B2) d'accumulateurs dédié en sortie de ligne (sL1, sL2), et comprenant une modification du profil d'impulsion de charge (PP1, PP2) associé en fonction des mesures dudit au moins un paramètre de fonctionnement.

**16.** Procédé de régénération selon la revendication 15, dans lequel l'au moins un paramètre de fonctionnement comprend au moins l'un des paramètres suivants :

- une capacité du jeu de batterie (B1, B2) d'accumulateurs dédié en sortie de ligne (sL1, SL2) ;
- une tension aux bornes d'au moins un accumulateur de l'une des batteries (B1, B2) d'accumulateurs du jeu de batterie (B1, B2) d'accumulateurs ;
- une température d'au moins un accumulateur de l'une des batteries (B1, B2) d'accumulateurs du jeu de batterie (B1, B2) d'accumulateurs.

**17.** Procédé de régénération selon l'une quelconque des revendications 13 à 16, comprenant, pour chacune des au moins deux lignes de régénération (L1, L2), une mesure en continu d'une intensité (Ip1, Ip2) des impulsions de charge (P1 P2) envoyées au jeu de batteries (B1, B2) d'accumulateurs dédié en sortie de ligne (sL1, sL2), et dans lequel l'intensité (Ip1, Ip2) des impulsions de charge (P1, P2) est comparée avec le courant de consigne (Ic1, Ic2), maintenant/stabilisant l'intensité (Ip1, Ip2) des impulsions de charge (P1, P2) au courant de consigne (Ic1, Ic2) lorsqu'elle l'atteint, c'est-à-dire lorsqu'elle devient égale au courant de consigne (Ic1, Ic2).

**Patentansprüche**

**1.** Regenerationssystem (1) zur Regeneration mehrerer zu regenerierender Akkumulatorbatterien (B1, B2), beispielsweise Batterien (B1, B2) aus Blei oder Nickel-Cadmium, das Regenerationssystem (1) umfassend einen Leistungstransformator (G), der an einem Ausgang ein sinusförmiges Wechselsignal (Vg) abgibt, eine Entladebank (D), die an einem Ausgang einen Entladestrom (Id1, Id2) abgibt, und mindestens zwei Regenerationsleitungen (L1, L2),

wobei jede der mindestens zwei Regenerationsleitungen (L1, L2) umfasst:

- einen Leitungsausgang (sL1, sL2), der zur Verbindung mit einem speziellen Batteriesatz (B1, B2) aus den mehreren zu regenerierenden Akkumulatorbatterien (B1, B2) vorgesehen ist;
- ein Umwandlungsmodul (CM1, CM2), das mit dem Ausgang des Transformators (G) verbunden ist, zur Umwandlung des sinusförmigen Wechselsignals (Vg) in ein Ladesignal (Vc1, Vc2), das aus einer Ladeimpulsfolge (P1, P2) besteht, umfassend aufeinanderfolgende Ladeimpulse (P1, P2), wobei zwei aufeinanderfolgende Ladeimpulse (P1, P2) durch eine Pausenzeit (toff1, toff2) getrennt sind;
- einen gesteuerten Schalter (Sw1, Sw2), der am Ausgang des Umwandlungsmoduls (CM1, CM2) angeordnet ist und der in einer mit einer Ladephase zugeordneten Ladekonfiguration konfigurierbar ist und wobei der gesteuerte Schalter (Sw1, Sw2) das Umwandlungsmodul (CM1, CM2) am Leitungsausgang (sL1, sL2) verbindet und die Entladebank (D) vom Leitungsausgang (sL1, sL2) trennt, und in einer Entladekonfiguration, die mit einer Entladephase verbunden ist und in der der gesteuerte Schalter (Sw1, Sw2) die Entladebank (D) mit dem Leitungsausgang (sL1, sL2) verbindet und das Umwandlungsmodul (CM1, CM2) vom Leitungsausgang (sL1, sL2) trennt;

und wobei das Regenerationssystem (1) ferner eine mit dem Umwandlungsmodul (CM1, CM2) und dem gesteuerten Schalter (Sw1, Sw2) jeder der mindestens zwei Regenerationsleitungen (L1, L2) verbundene Kontroll-/Steuereinheit (UC) umfasst,
wobei die Kontroll-/Steuereinheit (UC) so konfiguriert ist, dass sie in der Ladephase die Umwandlungsmodule (CM1, CM2) der mindestens zwei Regenerationsleitungen (L1, L2) ansteuert, damit ihre jeweiligen Ladesignale (Vc1, Vc2) zeitlich verschoben werden, sodass jeder Ladeimpuls (P1, P2) des Ladestsignals (Vc1, Vc2), das am Leitungsausgang (sL1, sL2) einer der mindestens zwei Regenerationsleitungen (L1, L2) abgegeben wird, mit der Pausenzeit (toff1, toff2) des Ladesignals (Vc1, Vc2) übereinstimmt, das am Leitungsausgang (SL1, sL2) der anderen oder jeder anderen der mindestens zwei Regenerationsleitungen (L1, L2) abgegeben wird.

**2.** Regenerationssystem (1) nach Anspruch 1, wobei das Umwandlungsmodul (CM1, CM2) jeder der mindestens zwei Regenerationsleitungen (L1, L2) eine Gleichrichtervorrichtung (R1, R2) umfasst, die mindestens für eine Gleichrichtung des sinusförmigen Wechselsignals (Vg) in ein gleichgerichtetes Signal (Vr) ausgelegt ist.

**3.** Regenerationssystem (1) nach Anspruch 2, wobei die Gleichrichtervorrichtung (R1, R2) ein dreiphasiger Doppelwechselrichter mit Thyristoren (TB1, TB2) ist.

**4.** Regenerationssystem (1) nach Anspruch 2 oder 3, wobei die Kontroll-/Steuereinheit (UC) während der Ladephase so ausgelegt ist, dass sie kontinuierlich auf jeder der mindestens zwei Regenerationsleitungen (L1, L2) eine Amplitude des gleichgerichteten Signals (Vr) misst.

5. Regenerationssystem (1) nach einem der vorhergehenden Ansprüche, wobei für jede der mindestens zwei Regenerationsleitungen (L1, L2), in der Kontroll-/Steuereinheit (UC) ein Ladeimpulsprofil (PP1, PP2) des zugeordneten Ladesignals (Vc1, Vc2) parametriert ist, das eine Impulsdauer (d1, d2), eine Schwellwertamplitude (Vt1, Vt2), die Pausenzeit (toff1, toff2), und einem Sollstrom (Ic1, Ic2) umfasst.

6. Regenerationssystem (1) nach Anspruch 5, wobei das Ladeimpulsprofil (PP1, PP2) für jede der mindestens zwei Regenerationsleitungen (L1, L2) so parametriert ist, dass die Impulsdauer (d1, d2) zwischen 80 ms und 500 ms und die Pausenzeit (toff1, toff2) zwischen 1 und 7 s beträgt.

7. Regenerationssystem (1) nach Anspruch 5 oder 6, wobei die Kontroll-/Steuereinheit (UC) Batteriekontrollsysteme (BMS1, BMS2) umfasst, um für jede der mindestens zwei Regenerationsleitungen (L1), L2) mindestens einen Betriebsparameter des jeweiligen Akkumulatorbatteriesatzes (B1, B2) am Leitungsausgang (sL1, sL2) zu messen, und wobei die Kontroll-/Steuereinheit (UC) so ausgelegt ist, dass sie das Ladeimpulsprofil (PP1, PP2) in Abhängigkeit von den Messungen des mindestens einen Betriebsparameters ändert.

8. Regenerationssystem (1) nach Anspruch 7, wobei der mindestens eine Betriebsparameter mindestens einen der folgenden Parameter umfasst:

- eine Kapazität des jeweiligen Akkumulatorbatteriesatzes (B1, B2) am Leitungsausgang (sL1, sL2);
- eine Spannung an den Klemmen mindestens eines Akkumulators einer der Akkumulatorbatterien (B1, B2) des Akkumulatorbatteriesatzes (B1, B2);
- eine Temperatur von mindestens einem Akkumulator einer der Akkumulatorbatterien (B1, B2) des Akkumulatorbatteriesatzes (B1, B2).

9. Regenerationssystem (1) nach einem der Ansprüche 5 bis 8, wobei die Kontroll-/Steuereinheit (UC) mit Strommessvorrichtungen (MS1, MS2) verbunden ist oder diese umfasst, die zum Messen, mindestens während der Ladephase, für jede der mindestens zwei Regenerationsleitungen (L1 L2), einer Intensität (Ip1, Ip2) der an den Akkumulatorbatteriesatz (B1, B2) gesendeten Ladeimpulse (P1, P2) am Leitungsausgang (sL1, sL2) ausgelegt sind, und wobei, für jede der mindestens zwei Regenerationsleitungen (sL1, sL2), die Kontroll-/Steuereinheit (UC) so ausgelegt ist, dass sie die Intensität (Ip1, Ip2) der Ladeimpulse (P1, P2) mit dem Sollstrom (Ic1, Ic2) vergleicht, und um die Intensität (Ip1, Ip2) der Ladeimpulse (Ip1, Ip2) auf dem Sollstrom (Ic1, Ic2) aufrechtzuerhalten/ zu stabilisieren, wenn dieser erreicht wird, d. h. wenn er gleich dem Sollstrom (Ic1, Ic2) ist.

10. Regenerationsverfahren zur Regeneration mehrerer zu regenerierender Akkumulatorbatterien (B1, B2), beispielsweise Batterien aus Blei oder Nickel-Cadmium, wobei das Regenerationssystem (1) nach einem der vorhergehenden Ansprüche verwendet wird, und bei dem der Leitungsausgang (sL1, sL2) jeder der mindestens zwei Regenerationsleitungen (L1, L2) mit einem jeweiligen Akkumulatorbatteriesatz (B1, B2) aus den mehreren Akkumulatorbatterien (B1, B2) verbunden ist, wobei das Regenerationsverfahren mindestens eine Ladephase umfasst, in der gleichzeitig und für jede der mindestens zwei Regenerationsleitungen (L1, L2) durchgeführt werden:

- eine Umwandlung, bei der das Umwandlungsmodul (CM1, CM2) das sinusförmige Wechselsignal (Vg) in ein Ladesignal (Vc1, Vc2) umwandelt, das aus einer Ladeimpulsfolge (P1, P2) besteht, umfassend aufeinanderfolgende Ladeimpulse (P1, P2), wobei zwei aufeinanderfolgende Ladeimpulse (P1, P2) durch eine Pausenzeit (toff1, toff2) getrennt sind;
- eine Übertragung des Ladesignals (Vc1, Vc2) an den jeweiligen gesteuerten Schalter (Sw1, Sw2), der in der Ladekonfiguration konfiguriert ist;

und bei dem, während der Ladephase, durch die Kontroll-/Steuereinheit (UC) eine Ansteuerung der Umwandlungsmodule (CM1, CM2) der mindestens zwei Regenerationsleitungen (L1, L2) durchgeführt wird, damit ihre jeweiligen Ladesignale (Vc1, Vc2) zeitlich verschoben werden, sodass jeder Ladeimpuls (P1 P2) des Ladesignals (Vc1, Vc2), das am Leitungsausgang (sL1, sL2) einer der mindestens zwei Regenerationsleitungen (L1, L2) abgegeben wird, mit der Pausenzeit (toff1, tof2) des Ladesignals (Vc1, Vc2) übereinstimmt, das am Leitungsausgang (sL1, sL2) der anderen oder jeder anderen der mindestens zwei Regenerationsleitungen (L1, L2) abgegeben wird.

11. Regenerationsverfahren nach Anspruch 10, wobei während der Ladephase, für jede der mindestens zwei Regenerationsleitungen (L1, L2) eine Gleichrichtung des sinusförmigen Wechselsignals (Vg) in ein gleichgerichtetes Signal (Vr) mittels einer im Umwandlungsmodul (CM1, CM2) enthaltenen Gleichrichtervorrichtung (R1, R2) jeder der mindestens zwei Regenerationsleitungen (L1, L2) durchgeführt wird.

12. Regenerationsverfahren nach Anspruch 11, wobei während der Ladephase für jede der mindestens zwei Regenerationsleitungen (L1, L2) eine kontinuierliche Messung einer Amplitude des gleichgerichteten Signals (Vr) durchgeführt wird.

13. Regenerationsverfahren nach einem der Ansprüche 10 bis 12, umfassend eine Parametrierung, vor einer Ladephase, für jede der mindestens zwei Regenerationsleitungen (L1, L2), eines Ladeimpulsprofils (PP1, PP2) des zugeordneten Ladesignals (Vc1, Vc2), das eine Impulsdauer (d1, d2), eine Schwellenamplitude (Vt1, Vt2), die Pausenzeit (toff1, toff2) und einen Sollstrom (Ic1, Ic2) umfasst.

14. Regenerationsverfahren nach Anspruch 13, wobei das Ladeimpulsprofil (PP1, PP2) für jede der mindestens zwei Regenerationsleitungen (L1, L2) so parametriert ist, dass die Impulsdauer (d1, d2) zwischen 80 ms und 500 ms und die Pausenzeit (toff1, toff2) zwischen 1 und 7 s beträgt.

15. Regenerationsverfahren nach Anspruch 13 oder 14, umfassend für jede der mindestens zwei Regenerationsleitungen (L1, L2), eine Messung mindestens eines Betriebsparameters des jeweiligen Akkumulatorbatteriesatzes (B1, B2) am Leitungsausgang (sL1, sL2), und umfassend eine Änderung des Ladeimpulsprofils (PP1, PP2), das in Abhängigkeit von den Messungen des mindestens einen Betriebsparameters zugeordnet ist.

16. Regenerationsverfahren nach Anspruch 15, wobei der mindestens eine Betriebsparameter mindestens einen der folgenden Parameter umfasst:

- eine Kapazität des jeweiligen Akkumulatorbatteriesatzes (B1, B2) am Leitungsausgang (sL1, SL2);
- eine Spannung an den Klemmen mindestens eines Akkumulators einer der Akkumulatorbatterien (B1, B2) des Akkumulatorbatteriesatzes (B1, B2);
- eine Temperatur von mindestens einem Akkumulator einer der Akkumulatorbatterien (B1, B2) des Akkumulatorbatteriesatzes (B1, B2).

17. Regenerationsverfahren nach einem der Ansprüche 13 bis 16, umfassend, für jede der mindestens zwei Regenerationsleitungen (L1, L2), eine kontinuierliche Messung einer Intensität (Ip1, Ip2) der Ladeimpulse (P1 P2), die an den jeweiligen Akkumulatorbatteriesatz (B1, B2) am Leitungsausgang (sL1, sL2) gesendet werden, und wobei die Stromstärke (Ip1, Ip2) der Ladeimpulse (P1, P2) mit dem Sollstrom (Ic1, Ic2) verglichen wird, der die Intensität (Ip1, p2) der Ladeimpulse (P1, P2) an den Sollstrom (Ic1, Ic2) aufrechterhält/stabilisiert, wenn sie ihn erreicht, d. h. wenn sie gleich dem Sollstrom (Ic1, Ic2) ist.

**Claims**

1. A regeneration system (1) for regenerating several accumulator batteries (B1, B2) to be regenerated, for example, lead or nickel-cadmium batteries (B1, B2), said regeneration system (1) comprising a power transformer (G) delivering, at an output, a sinusoidal alternating signal (Vg), a discharge bank (D) delivering, at an output, a discharge current (Id1, Id2), and at least two regeneration lines (L1, L2),

wherein each of the at least two regeneration lines (L1, L2) comprises:

- a line output (sL1, sL2) intended to be connected to a dedicated set of accumulator batteries (B1, B2) from among the several accumulator batteries (B1, B2) to be regenerated;
- a conversion module (CM1, CM2) connected to the output of the transformer (G), for converting said sinusoidal alternating signal (Vg) into a charge signal (Vc1, Vc2) composed of a train of charge pulses (P1, P2) comprising successive charge pulses (P1, P2), two successive charge pulses (P1, P2) being separated by a pause time (toff1, toff2);
- a controlled switch (Sw1, Sw2) which is arranged at the output of the conversion module (CM1, CM2) and which is configurable in a charge configuration associated with a charge phase, and in which said controlled switch (Sw1, Sw2) connects the conversion module (CM1, CM2) to the line output (sL1, sL2) and disconnects the discharge bank (D) from the line output (sL1, sL2), and in a discharge configuration associated with a discharge phase, and in which said controlled switch (Sw1, Sw2) connects the discharge bank (D) to the line output (sL1, sL2) and disconnects the conversion module (CM1, CM2) from the line output (sL1, sL2);

and wherein said regeneration system (1) further comprises a monitoring/control unit (UC) connected to the conversion module (CM1, CM2) and to the controlled switch (Sw1, Sw2) of each of the at least two regeneration lines (L1, L2),

said monitoring/control unit (UC) being configured to, during the charge phase, drive the conversion modules (CM1, CM2) of the at least two regeneration lines (L1, L2) so that their respective charge signals (Vc1, Vc2) are time-shifted, so that each charge pulse (P1, P2) of the charge signal (Vc1, Vc2) delivered at the line output (sL1, sL2) of one of the at least two regeneration lines (L1, L2) coincides with the pause time (toff1, toff2) of the charge signal (Vc1, Vc2) delivered at the line output (sL1, sL2) of the other or each of the other of the at least two regeneration lines (L1, L2).

2. The regeneration system (1) according to claim 1, wherein the conversion module (CM1, CM2) of each of the at least two regeneration lines (L1, L2) comprises a rectifier device (R1, R2) configured at least for rectifying the sinusoidal alternating signal (Vg) into a rectified signal (Vr).

3. The regeneration system (1) according to claim 2, wherein the rectifier device (R1, R2) is a three-phase full-wave thyristor rectifier (TB1, TB2).

4. The regeneration system (1) according to claim 2 or 3, wherein, during the charge phase, the monitoring/control unit (UC) is configured to continuously measure, at each of the at least two regeneration lines (L1, L2), an amplitude of the rectified signal (Vr).

5. The regeneration system (1) according to any one of the preceding claims, wherein, for each of the at least two regeneration lines (L1, L2), a charge pulse profile (PP1, PP2) of the associated charge signal (Vc1, Vc2) is parameterized in the monitoring/control unit (UC), comprising a pulse duration (d1, d2), a threshold amplitude (Vt1, Vt2), the pause time (toff1, toff2), and a setpoint current (Ic1, Ic2).

6. The regeneration system (1) according to claim 5, wherein the charge pulse profile (PP1, PP2), for each of the at least two regeneration lines (L1, L2), is parameterized such that the pulse duration (d1, d2) is between 80 ms and 500 ms, and the pause time (toff1, toff2) is between 1 and 7 s.

7. The regeneration system (1) according to claim 5 or 6, wherein the monitoring/control unit (UC) comprises battery monitoring systems (BMS1, BMS2) for measuring, for each of the at least two regeneration lines (L1, L2), at least one operating parameter of the dedicated set of accumulator batteries (B1, B2) at the line output (sL1, sL2), and said monitoring/control unit (UC) being configured to modify the charge pulse profile (PP1, PP2) depending on the measurements of said at least one operating parameter.

8. The regeneration system (1) according to claim 7, wherein the at least one operating parameter comprises at least one of the following parameters:

- a capacity of the dedicated set of accumulator batteries (B1, B2) at the line output (sL1, sL2);
- a voltage across at least one accumulator of one of the accumulator batteries (B1, B2) of the set of accumulator batteries (B1, B2);
- a temperature of at least one accumulator of one of the accumulator batteries (B1, B2) of the set of accumulator batteries (B1, B2).

9. The regeneration system (1) according to any one of claims 5 to 8, wherein the monitoring/control unit (UC) is connected to or comprises current measuring devices (MS1, MS2) configured to measure, at least during the charge phase, for each of the at least two regeneration lines (L1, L2), an intensity (Ip1, Ip2) of the charge pulses (P1, P2) sent to the dedicated set of accumulator batteries (B1, B2) at the line output (sL1, sL2), and wherein, for each of the at least two regeneration lines (sL1, sL2), said monitoring/control unit (UC) is configured to compare the intensity (Ip1, Ip2) of the charge pulses (P1, P2) with the setpoint current (Ic1, Ic2), and to maintain/stabilize the intensity (Ip1, Ip2) of the charge pulses (Ip1, Ip2) at the setpoint current (Ic1, Ic2) when it reaches it, that is, when it becomes equal to the setpoint current (Ic1, Ic2).

10. A regeneration method for regenerating several accumulator batteries (B1, B2) to be regenerated, for example, lead or nickel-cadmium batteries, wherein the regeneration system (1) according to any of the preceding claims is used, and wherein the line output (sL1, sL2) of each of the at least two regeneration lines (L1, L2) is connected to a dedicated set of accumulator batteries (B1, B2) from among the several accumulator batteries (B1, B2) to be regenerated, said regeneration method comprising at least one charge phase during which the following are implemented simultaneously and for each of the at least two regeneration lines (L1, L2):

- a conversion during which the conversion module (CM1, CM2) converts the sinusoidal alternating signal (Vg) into a charge signal (Vc1, Vc2) composed of a train of charge pulses (P1, P2) comprising successive charge pulses (P1, P2), two successive charge pulses (P1, P2) being separated by a pause time (toff1, toff2);
- a transmission of the charge signal (Vc1, Vc2) to the dedicated controlled switch (Sw1, Sw2) which is configured in the charge configuration;

and wherein, during said charge phase, driving, by the monitoring/control unit (UC), of the conversion modules (CM1, CM2) of the at least two regeneration lines (L1, L2) is implemented so that their respective charge signals (Vc1, Vc2) are time-shifted, so that each charge pulse (P1, P2) of the charge signal (Vc1, Vc2) delivered at the line output (sL1, sL2) of one of the at least two regeneration lines (L1, L2) coincides with the pause time (toff1, toff2) of the charge signal (Vc1, Vc2) delivered at the line output (sL1, sL2) of the other or each of the other of the at least two regeneration lines (L1, L2).

11. The regeneration method according to claim 10, wherein, during the charge phase, for each of the at least two regeneration lines (L1, L2), a rectification of the sinusoidal alternating signal (Vg) into a rectified signal (Vr) is implemented by means of a rectifier device (R1, R2) included in the conversion module (CM1, CM2) of each of the at least two regeneration lines (L1, L2).

12. The regeneration method according to claim 11, wherein, during the charge phase, for each of the at least two regeneration lines (L1, L2), a continuous measurement of an amplitude of the rectified signal (Vr) is implemented.

13. The regeneration method according to any one of claims 10 to 12, comprising, prior to a charge phase, for each of the at least two regeneration lines (L1, L2), a parameterization of a charge pulse profile (PP1, PP2) of the associated charge signal (Vc1, Vc2) which comprises a pulse duration (d1, d2), a threshold amplitude (Vt1, Vt2), the pause time (toff1, toff2), and a setpoint current (Ic1, Ic2).

14. The regeneration method according to claim 13, wherein the charge pulse profile (PP1, PP2), for each of the at least two regeneration lines (L1, L2), is parameterized such that the pulse duration (d1, d2) is between 80 ms and 500 ms, and the pause time (toff1, toff2) is between 1 and 7 s.

15. The regeneration method according to claim 13 or 14, comprising, for each of the at least two regeneration lines (L1, L2), a measurement of at least one operating parameter of the dedicated set of accumulator batteries (B1, B2) at the line output (sL1, sL2), and comprising a modification of the associated charge pulse profile (PP1, PP2) depending on the measurements of said at least one operating parameter.

16. The regeneration method according to claim 15, wherein the at least one operating parameter comprises at least one of the following parameters:

- a capacity of the dedicated set of accumulator batteries (B1, B2) at the line output (sL1, sL2);
- a voltage across at least one accumulator of one of the accumulator batteries (B1, B2) of the set of accumulator batteries (B1, B2);
- a temperature of at least one accumulator of one of the accumulator batteries (B1, B2) of the set of accumulator batteries (B1, B2).

17. The regeneration method according to any one of claims 13 to 16, comprising, for each of the at least two regeneration lines (L1, L2), a continuous measurement of an intensity (Ip1, Ip2) of the charge pulses (P1, P2) sent to the dedicated set of accumulator batteries (B1, B2) at the line output (sL1, sL2), and wherein the intensity (Ip1, Ip2) of the charge pulses (P1, P2) is compared with the setpoint current (Ic1, Ic2), maintaining/stabilizing the intensity (Ip1, Ip2) of the charge pulses (P1, P2) at the setpoint current (Ic1, Ic2) when it reaches it, that is, when it becomes equal to the setpoint current (Ic1, Ic2).

**Fig. 1**

Fig. 2

**Fig. 3**

Fig. 4

**Fig. 5**

**EP 4 473 636 B1**

## RÉFÉRENCES CITÉES DANS LA DESCRIPTION

**Documents brevets cités dans la description**

- EP 0704112 A
- EP 2377196 A
- WO 0077911 A
- US 6856118 B1
- WO 2006041378 A
- FR 2955000 A1